# EUROPEAN PATENT SPECIFICATION

(11) **EP 1 980 730 B1**
(45) Date of publication and mention of the grant of the patent: **31.10.2018**
(21) Application number: 07007341.6
(22) Date of filing: 10.04.2007
(51) Int. Cl.: F02B 19/06

(54) **Apparatus with mixed fuel separator and method of separating a mixed fuel**
Vorrichtung mit einem Mischbrennstofftrenner und Verfahren zum Trennen eines Mischbrennstoffs
Appareil doté d'un séparateur de combustible mixte et procédé de séparation de combustible mixte

(43) Date of publication of application: 15.10.2008
(73) Proprietor: Ford Global Technologies, LLC, Dearborn MI 48126-2490 (US)
(72) Inventor: Dearth, Mark, Dearborn, MI 48128 (US); Goralski, Christian T. Jr., St. Paul, MN 55115 (US); Leone, Thomas G, Ypsilanti, MI 48197 (US)
(74) Representative: Laufhütte, Dieter

(56) References cited:
- WO-A-2006/055540
- JP-A- 2007 056 754
- US-A- 4 411 243
- US-A1- 2006 037 589
- US-A1- 2007 028 861
- US-A1- 2007 034 192
- US-B1- 7 159 568

## Description

### Background and Summary

Engines may use various forms of fuel delivery to provide a desired amount of fuel for combustion in each cylinder. One type of fuel delivery uses a port injector for each cylinder to deliver fuel to respective cylinders. Still another type of fuel delivery uses a direct injector for each cylinder.

Further, engines have been proposed using more than one type of fuel injection. For example, the papers titled "Calculations of Knock Suppression in Highly Turbocharged Gasoline/Ethanol Engines Using Direct Ethanol Injection" and "Direct Injection Ethanol Boosted Gasoline Engine: Biofuel Leveraging for Cost Effective Reduction of Oil Dependence and CO2 Emissions" by Heywood et al. are one example. Specifically, the Heywood et al. papers describe directly injecting ethanol to improve charge cooling effects, while relying on port injected gasoline for providing the majority of combusted fuel over a drive cycle. The ethanol provides increased octane and increased charge cooling due to its higher heat of vaporization compared with gasoline, thereby reducing knock limits on boosting and/or compression ratio. Further, water may be mixed with ethanol and/or used as an alternative to ethanol. The above approaches purport to improve engine fuel economy and increase utilization of renewable fuels.

However, the inventors herein have recognized several issues with such an approach. Specifically, requiring a user to always provide separate fuels (e.g., gasoline and ethanol) can be burdensome to the operator. To simplify use of an engine with more than one type of fuel injection, the inventors herein have recognized that such an approach may be more easily implemented by the use of a mixed fuel in conjunction with a separator disposed between a fuel tank and internal combustion engine, and by the use of a method comprising inputting a mixed fuel containing a hydrocarbon component and an oxygenated component into the separator, separating the fuel in the separator into a first hydrocarbon-enriched fuel fraction and a second oxygenated fuel-enriched fuel fraction, and controlling an amount of the first fuel fraction and an amount of the second fuel fraction provided to the engine based upon an engine operating condition. This approach takes advantage of already available gas/alcohol mixtures, and therefore may allow advantages of multiple injection and/or multiple fuel strategies to be employed without inconveniencing a user.

As another approach, a method of operating a vehicle system including an internal combustion engine is provided, the method comprising separating a second fuel from a first fuel, the second fuel having a greater concentration of at least one component than the first fuel; combusting at least said first fuel at least during a first engine load; and combusting at least said second fuel at least during a second engine load higher than the first engine load.

As yet another approach, a vehicle system is provided, comprising an internal combustion engine including at least one cylinder; a separator for separating a second fuel and a first fuel from a fuel mixture, the second fuel having a greater concentration of alcohol than the first fuel; a direct injector for injecting the second fuel directly into the cylinder; a boosting device coupled to an air passage communicating with the engine; and a control system for combusting at least said first fuel in the cylinder at least during a first engine load; and combusting at least said second fuel in the cylinder at least during a second engine load higher than the first engine load.

In this way, a knock suppressing substance may be provided to the engine based on engine load, for example, to reduce the potential for engine knock, thereby enabling improved engine performance while also reducing user inconvenience during a fueling operation of the vehicle.

Document JP 2007 056 754 A discloses a method and system for operating an IC engine according to the preamble of the independent claims.

### Brief Description of the Drawings

Figure 1 shows a schematic diagram of a generic engine system.
Figure 2A shows a partial view of an exemplary embodiment of an engine.
Figure 2B shows an engine with a turbocharger.
Figure 3 shows an exemplary embodiment of a fuel system with a fuel separator.
Figure 4 shows a flow diagram of an exemplary embodiment of a method of operating an engine.
Figure 5 shows a block diagram of another exemplary embodiment of a fuel system with a fuel separator.
Figure 6 shows a block diagram of another exemplary embodiment of a fuel system with a fuel separator.
Figure 7 shows a sectional view of an exemplary embodiment of a fuel separator.
Figure 8 shows a sectional view of another exemplary embodiment of a fuel separator.
Figure 9 shows a sectional view of another exemplary embodiment of a fuel separator.
Figure 10 shows a sectional view of another exemplary embodiment of a fuel separator.
Figure 11 shows a schematic view of another exemplary embodiment of a fuel separator.
Figure 12 shows a block diagram of another exemplary embodiment of a fuel system with a fuel separator.
Figure 13 shows a block diagram of another exemplary embodiment of a fuel system with a fuel separator.
Figure 14 shows a block diagram of another exemplary embodiment of a fuel system with a fuel separator.
Figures 15-16 show example enablement routines;
Figures 17, 19, and 21 show alterative fuel system layouts;
Figures 18, 20, and 22 show separator control routines for various fuel system layouts;
Figures 23, 24, and 25 show graphs of example parameter variation;
Figure 26 shows an example routine for controlling engine and separator operation; and
Figures 27-30 are graphs illustrating example operation with respect to Figure 26.

### Detailed Description

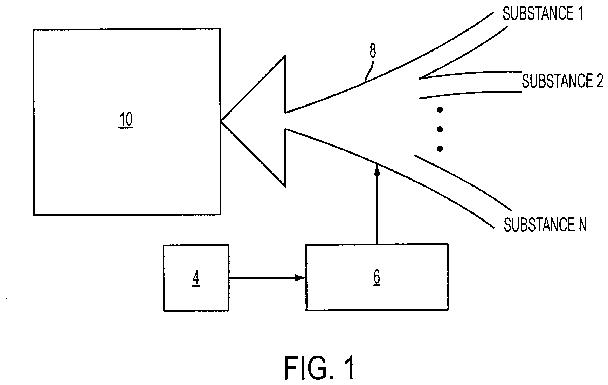

Figure 1 shows an engine 10 receiving delivery of a plurality of substances (1, 2, ..., N) via arrow 8. The various substances may include multiple different fuel blends, injection locations, or various other alternatives. In one example, multiple different substances having different gasoline and/or alcohol and/or water, and/or other compound concentrations may be delivered to the engine, and may be delivered in a mixed state, or separately delivered. Further, the relative amounts and/or ratios of the different substances may be variable controlled by a controller 6 in response to operating conditions, which may be provided via sensor(s) 4.

In one example, the different substances may represent different fuels having different levels of alcohol, including one substance being gasoline and the other being ethanol. In another example, engine 10 may use gasoline as a first substance and an alcohol containing fuel such as ethanol, methanol, a mixture of gasoline and ethanol (e.g., E85 which is approximately 85% ethanol and 15% gasoline), a mixture of gasoline and methanol (e.g., M85 which is approximately 85% methanol and 15% gasoline), a mixture of an alcohol and water, a mixture of an alcohol, water, and gasoline, etc as a second substance. In still another example, the first substance may be a gasoline alcohol blend with a lower alcohol concentration than a gasoline alcohol blend of a second substance. In yet another example, the first substance may be gasoline or diesel fuel, and the second substance may be a dimethyl ether, a methyl ester, a lower alkyl alcohol (such as methanol, ethanol, propanol, or butanol), or a mixture thereof.

In another embodiment, different injector locations may be used for different substances. For example, a single injector (such as a direct injector) may be used to inject a mixture of two substances (e.g., gasoline and an alcohol/water mixture), where the relative amount or ratio of the two or more fuel quantities or substances in the mixture may be varied during engine operation via adjustments made by controller 6 via a mixing valve (not shown), for example. In still another example, two different injectors for each cylinder are used, such as port and direct injectors, each injecting a different substance in different relative amounts as operating conditions vary. In even another embodiment, different sized injectors, in addition to different locations and different substances, may be used. In yet another embodiment, two port injectors with different spray patterns and/or aim points may be used.

Various advantageous results may be obtained by various of the above systems. For example, when using both gasoline and a fuel having alcohol (e.g., ethanol), it may be possible to adjust the relative amounts of the fuels to take advantage of the increased charge cooling of alcohol fuels (e.g., via direct injection) to reduce the tendency of knock (e.g., in response to knock or increased load, increasing a relative amount of alcohol and/water). This phenomenon, combined with increased compression ratio, and/or boosting and/or engine downsizing, can then be used to obtain large fuel economy benefits (by reducing the knock limitations on the engine), while allowing engine operation on gasoline at lighter loads when knock is not a constraint. The knock suppression benefits offered by this phenomenon may be significantly larger than the benefits offered by the dual injection of hydrocarbon fuels with different octane ratings. However, when combusting a mixture having alcohol, the likelihood of pre-ignition may be increased under certain operating conditions. As such, in one example, by utilizing water instead of or mixed into the substance having alcohol, it may be possible to reduce the likelihood of pre-ignition, while still taking advantage of increased charge cooling effects and the availability of alcohol containing fuels.

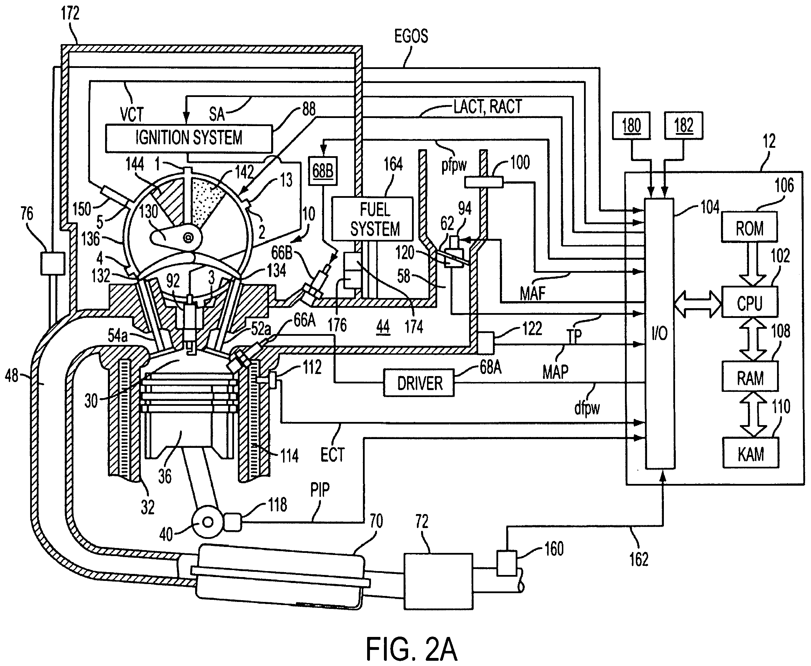

Referring now to Figure 2A, it shows one cylinder of a multi-cylinder engine, as well as the intake and exhaust path connected to that cylinder. Further, Figure 2A shows one example fuel system with two fuel injectors per cylinder, for at least one cylinder. In one embodiment, each cylinder of the engine may have two fuel injectors. The two injectors may be configured in various locations, such as two port injectors, one port injector and one direct injector (as shown in Figure 2A), or others.

Also, as described herein, there are various configurations of the cylinders, fuel injectors, and exhaust system, as well as various configurations for the fuel vapor purging system and exhaust gas oxygen sensor locations.

Continuing with Figure 2A, it shows a multiple injection system, where engine 10 has both direct and port fuel injection, as well as spark ignition. Internal combustion engine 10, comprising a plurality of combustion chambers, is controlled by electronic engine controller 12. Combustion chamber 30 of engine 10 is shown including combustion chamber walls 32 with piston 36 positioned therein and connected to crankshaft 40. A starter motor (not shown) may be coupled to crankshaft 40 via a flywheel (not shown), or alternatively direct engine starting may be used.

In one particular example, piston 36 may include a recess or bowl (not shown) to help in forming stratified charges of air and fuel, if desired. However, in an alternative embodiment, a flat piston may be used.

Combustion chamber, or cylinder, 30 is shown communicating with intake manifold 44 and exhaust manifold 48 via respective intake valves 52a and 52b (not shown), and exhaust valves 54a and 54b (not shown). Thus, while four valves per cylinder may be used, in another example, a single intake and single exhaust valve per cylinder may also be used. In still another example, two intake valves and one exhaust valve per cylinder may be used.

Combustion chamber 30 can have a compression ratio, which is the ratio of volumes when piston 36 is at bottom center to top center. In one example, the compression ratio may be approximately 9:1. However, in some examples where different fuels are used, the compression ratio may be increased. For example, it may be between 10:1 and 11:1 or 11:1 and 12:1, or greater.

Fuel injector 66A is shown directly coupled to combustion chamber 30 for delivering injected fuel directly therein in proportion to the pulse width of signal dfpw received from controller 12 via electronic driver 68A. While Figure 2A shows injector 66A as a side injector, it may also be located overhead of the piston, such as near the position of spark plug 92. Such a position may improve mixing and combustion due to the lower volatility of some alcohol based fuels. Alternatively, the injector may be located overhead and near the intake valve to improve mixing.

Fuel and/or water may be delivered to fuel injector 66A by a high pressure fuel system (not shown) including a fuel tank, fuel pumps, and a fuel rail. Alternatively, fuel and/or water may be delivered by a single stage fuel pump at lower pressure, in which case the timing of the direct fuel injection may be more limited during the compression stroke than if a high pressure fuel system is used. Further, while not shown, the fuel tank (or tanks) may (each) have a pressure transducer providing a signal to controller 12.

Fuel injector 66B is shown coupled to intake manifold 44, rather than directly to cylinder 30. Fuel injector 66B delivers injected fuel in proportion to the pulse width of signal pfpw received from controller 12 via electronic driver 68B. Note that a single driver 68 may be used for both fuel injection systems, or multiple drivers may be used. Fuel system 164 is also shown in schematic form delivering vapors to intake manifold 44, where fuel system 164 is also coupled to injectors 66A and 66B (although not shown in this Figure 2A). Various fuel systems and fuel vapor purge systems may be used.

Intake manifold 44 is shown communicating with throttle body 58 via throttle plate 62. In this particular example, throttle plate 62 is coupled to electric motor 94 so that the position of elliptical throttle plate 62 is controlled by controller 12 via electric motor 94. This configuration may be referred to as electronic throttle control (ETC), which can also be utilized during idle speed control. In an alternative embodiment (not shown), a bypass air passageway is arranged in parallel with throttle plate 62 to control inducted airflow during idle speed control via an idle control by-pass valve positioned within the air passageway.

Exhaust gas sensor 76 is shown coupled to exhaust manifold 48 upstream of catalytic converter 70 (where sensor 76 can correspond to various different sensors). For example, sensor 76 may be any of many known sensors for providing an indication of exhaust gas air/fuel ratio such as a linear oxygen sensor, a UEGO, a two-state oxygen sensor, an EGO, a HEGO, or an HC or CO sensor. In this particular example, sensor 76 is a two-state oxygen sensor that provides signal EGO to controller 12 which converts signal EGO into two-state signal EGOS. A high voltage state of signal EGOS indicates exhaust gases are rich of stoichiometry and a low voltage state of signal EGOS indicates exhaust gases are lean of stoichiometry. Signal EGOS may be used to advantage during feedback air/fuel control to maintain average air/fuel at stoichiometry during a stoichiometric homogeneous mode of operation. Further details of air-fuel ratio control are included herein.

Distributorless ignition system 88 provides ignition spark to combustion chamber 30 via spark plug 92 in response to spark advance signal SA from controller 12.

Controller 12 may cause combustion chamber 30 to operate in a variety of combustion modes, including a homogeneous air/fuel mode and/or a stratified air/fuel mode by controlling injection timing, injection amounts, spray patterns, etc. Further, combined stratified and homogenous mixtures may be formed in the chamber. In one example, stratified layers may be formed by operating injector 66A during a compression stroke. In another example, a homogenous mixture may be formed by operating one or both of injectors 66A and 66B during an intake stroke (which may be open valve injection). In yet another example, a homogenous mixture may be formed by operating one or both of injectors 66A and 66B before an intake stroke (which may be closed valve injection). In still other examples, multiple injections from one or both of injectors 66A and 66B may be used during one or more strokes (e.g., intake, compression, exhaust, etc.). Even further examples may be where different injection timings and mixture formations are used under different conditions, as described below.

Controller 12 can control the amount of fuel delivered by fuel injectors 66A and 66B so that the homogeneous, stratified, or combined homogenous/stratified air/fuel mixture in chamber 30 can be selected to be at stoichiometry, a value rich of stoichiometry, or a value lean of stoichiometry.

While Figure 2A shows two injectors for the cylinder, one being a direct injector and the other being a port injector, in an alternative embodiment two port injectors for the cylinder may be used, along with open valve injection, for example.

Emission control device 72 is shown positioned downstream of catalytic converter 70. Emission control device 72 may be a three-way catalyst or a NOx trap, or combinations thereof.

Controller 12 is shown as a microcomputer, including microprocessor unit 102, input/output ports 104, an electronic storage medium for executable programs and calibration values shown as read only memory chip 106 in this particular example, random access memory 108, keep alive memory 110, and a conventional data bus. Controller 12 is shown receiving various signals from sensors coupled to engine 10, in addition to those signals previously discussed, including measurement of inducted mass air flow (MAF) from mass air flow sensor 100 coupled to throttle body 58; engine coolant temperature (ECT) from temperature sensor 112 coupled to cooling sleeve 114; a profile ignition pickup signal (PIP) from Hall effect sensor 118 coupled to crankshaft 40; and throttle position TP from throttle position sensor 120; absolute Manifold Pressure Signal MAP from sensor 122; an indication of knock from knock sensor 182; and an indication of absolute or relative ambient humidity from sensor 180. Engine speed signal RPM is generated by controller 12 from signal PIP in a conventional manner and manifold pressure signal MAP from a manifold pressure sensor provides an indication of vacuum, or pressure, in the intake manifold. During stoichiometric operation, this sensor can give an indication of engine load. Further, this sensor, along with engine speed, can provide an estimate of charge (including air) inducted into the cylinder. In one example, sensor 118, which is also used as an engine speed sensor, produces a predetermined number of equally spaced pulses every revolution of the crankshaft.

Continuing with Figure 2A, a variable camshaft timing system is shown. Specifically, camshaft 130 of engine 10 is shown communicating with rocker arms 132 and 134 for actuating intake valves 52a, 52b and exhaust valves 54a, 54b. Camshaft 130 is directly coupled to housing 136. Housing 136 forms a toothed wheel having a plurality of teeth 138. Housing 136 is hydraulically coupled to crankshaft 40 via a timing chain or belt (not shown). Therefore, housing 136 and camshaft 130 rotate at a speed substantially equivalent to the crankshaft. However, by manipulation of the hydraulic coupling as will be described later herein, the relative position of camshaft 130 to crankshaft 40 can be varied by hydraulic pressures in advance chamber 142 and retard chamber 144. By allowing high pressure hydraulic fluid to enter advance chamber 142, the relative relationship between camshaft 130 and crankshaft 40 is advanced. Thus, intake valves 52a, 52b and exhaust valves 54a, 54b open and close at a time earlier than normal relative to crankshaft 40. Similarly, by allowing high pressure hydraulic fluid to enter retard chamber 144, the relative relationship between camshaft 130 and crankshaft 40 is retarded. Thus, intake valves 52a, 52b, and exhaust valves 54a, 54b open and close at a time later than normal relative to crankshaft 40.

While this example shows a system in which the intake and exhaust valve timing are controlled concurrently, variable intake cam timing, variable exhaust cam timing, dual independent variable cam timing, or fixed cam timing may be used. Further, variable valve lift may also be used. Further, camshaft profile switching may be used to provide different cam profiles under different operating conditions. Further still, the valvetrain may be roller finger follower, direct acting mechanical bucket, electromechanical, electrohydraulic, or other alternatives to rocker arms.

Continuing with the variable cam timing system, teeth 138, being coupled to housing 136 and camshaft 130, allow for measurement of relative cam position via cam timing sensor 150 providing signal VCT to controller 12. Teeth 1, 2, 3, and 4 are preferably used for measurement of cam timing and are equally spaced (for example, in a V-8 dual bank engine, spaced 90 degrees apart from one another) while tooth 5 is preferably used for cylinder identification, as described later herein. In addition, controller 12 sends control signals (LACT, RACT) to conventional solenoid valves (not shown) to control the flow of hydraulic fluid either into advance chamber 142, retard chamber 144, or neither.

Relative cam timing can be measured in a variety of ways. In general terms, the time, or rotation angle, between the rising edge of the PIP signal and receiving a signal from one of the plurality of teeth 138 on housing 136 gives a measure of the relative cam timing. For the particular example of a V-8 engine, with two cylinder banks and a five-toothed wheel, a measure of cam timing for a particular bank is received four times per revolution, with the extra signal used for cylinder identification.

Sensor 160 may also provide an indication of oxygen concentration in the exhaust gas via signal 162, which provides controller 12 a voltage indicative of the O2 concentration. For example, sensor 160 can be a HEGO, UEGO, EGO, or other type of exhaust gas sensor. Also note that, as described above with regard to sensor 76, sensor 160 can correspond to various different sensors.

As described above, Figure 2A merely shows one cylinder of a multi-cylinder engine, and it is understood that each cylinder has its own set of intake/exhaust valves, fuel injectors, spark plugs, etc.

Also, in the example embodiments described herein, the engine may be coupled to a starter motor (not shown) for starting the engine. The starter motor may be powered when the driver turns a key in the ignition switch on the steering column, for example. The starter is disengaged after engine starting, for example, by engine 10 reaching a predetermined speed after a predetermined time.

Continuing with Figure 2A, an exhaust gas recirculation system is shown. Exhaust gas is delivered to intake manifold 44 by a conventional EGR tube 172 communicating with exhaust manifold 48, EGR valve assembly 174, and EGR orifice 176. Alternatively, tube 172 could be an internally routed passage in the engine that communicates between exhaust manifold 48 and intake manifold 44. As will be described in further detail herein, EGR tube 172 (or another EGR tube or a branch (not shown) of EGR tube 172) may be configured to assist the fuel system in the separation of a mixed fuel.

As noted above, engine 10 may operate in various modes, including lean operation, rich operation, and "near stoichiometric" operation. "Near stoichiometric" operation can refer to oscillatory operation around the stoichiometric air fuel ratio. Typically, this oscillatory operation is governed by feedback from exhaust gas oxygen sensors. In this near stoichiometric operating mode, the engine may be operated within approximately one air-fuel ratio of the stoichiometric air-fuel ratio.

Feedback air-fuel ratio control may be used for providing the near stoichiometric operation. Further, feedback from exhaust gas oxygen sensors can be used for controlling air-fuel ratio during lean and during rich operation. In particular, a switching type, heated exhaust gas oxygen sensor (HEGO) can be used for stoichiometric air-fuel ratio control by controlling fuel injected (or additional air via throttle or VCT) based on feedback from the HEGO sensor and the desired air-fuel ratio. Further, a UEGO sensor (which provides a substantially linear output versus exhaust air-fuel ratio) can be used for controlling air-fuel ratio during lean, rich, and stoichiometric operation. In this case, fuel injection (or additional air via throttle or VCT) can be adjusted based on a desired air-fuel ratio and the air-fuel ratio from the sensor. Further still, individual cylinder air-fuel ratio control could be used, if desired. Adjustments may be made with injector 66A, 66B, or combinations thereof depending on various factors, to control engine air-fuel ratio.

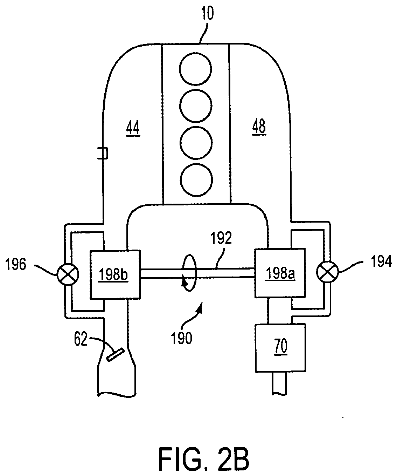

Also note that various methods can be used to maintain the desired torque such as, for example, adjusting ignition timing, throttle position, variable cam timing position, exhaust gas recirculation amount, and number of cylinders carrying out combustion. Further, these variables can be individually adjusted for each cylinder to maintain cylinder balance among all the cylinders. While not shown in Figure 2A, engine 10 may be coupled to various boosting devices, such as a supercharger or turbocharger, for example, as illustrated in Figure 2B. On a boosted engine, desired torque may also be maintained by adjusting wastegate and/or compressor bypass valves.

Referring now specifically to Figure 2B, an example engine 10 is shown with four in-line cylinders. In one embodiment, engine 10 may have a turbocharger 190, which has a turbine 198a coupled to the exhaust manifold 48 and a compressor 198b coupled to the intake manifold 44. While Figure 2B does not show an intercooler, one may optionally be used. Turbine 198a is typically coupled to compressor 198b via a drive shaft 192. Various types of turbochargers and arrangements may be used. For example, a variable geometry turbocharger (VGT) may be used where the geometry of the turbine and/or compressor may be varied during engine operation by controller 12. Alternately, or in addition, a variable nozzle turbocharger (VNT) may be used when a variable area nozzle is placed upstream and/or downstream of the turbine in the exhaust line (and/or upstream or downstream of the compressor in the intake line) for varying the effective expansion or compression of gasses through the turbocharger. Still other approaches may be used for varying expansion in the exhaust, such as a waste gate valve. Figure 2B shows an example bypass valve 194 around turbine 198a and an example bypass valve 196 around compressor 198b, where each valve may be controlled via controller 12. As noted above, the valves may be located within the turbine or compressor, or may be a variable nozzle.

Also, a twin turbocharger arrangement, and/or a sequential turbocharger arrangement, may be used if desired. In the case of multiple adjustable turbocharger and/or stages, it may be desirable to vary a relative amount of expansion though the turbocharger, depending on operating conditions (e.g. manifold pressure, airflow, engine speed, etc.). Further, a mechanically or electrically driven supercharger may be used, if desired.

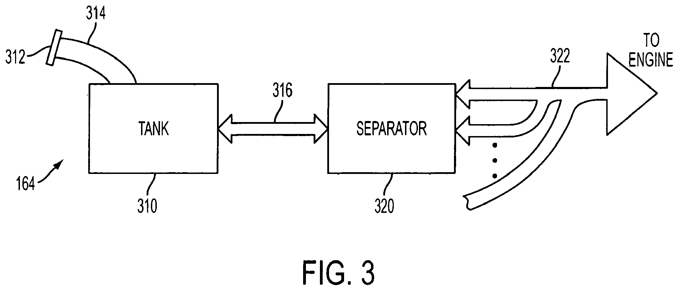

Referring now to Figure 3, an example fuel system layout is provided with fuel tank 310 having fuel fill cap 312. The system is configured to receive a fuel mixture through the fill line 314 and into tank 310, where the mixture may be a gasoline/alcohol mixture, a gasoline/alcohol/water mixture, or various others such as noted herein, including, a gasoline/ethanol mixture such as E10, for example. The fuel mixture in tank 310 may be transported to a separator system 320 via a transport system, shown by double arrow 316. The transport system 316 may be a one way transport, e.g., transporting the fuel mixture to the separator 320, or may enable two-way transportation, such as return lines from the separator or downstream fuel system back to the tank 310. The transport system 316 may include pumps, valves, multiple separate lines, or various other components, such as described below herein with regard to example systems. Further, while Figure 3 shows the transport system 316 external to tank 310, system 316 along with separator 320 and/or portions of transport system 322 may also be located within or at least partially within tank 310.

Continuing with Figure 3, it also shows downstream transport system 322 located between separator 320 and the engine (not shown). Transport system 322 is shown having at least two separate lines coupled to the separator to transport different amounts of substances or fuels with different constituents to the engine depending on operating conditions. Transport system 322 may maintain the different fuels separate in delivering the fuels to the engine, or may mix the fuels for co-delivery to the engine, as illustrated in Figure 3. Further, like system 316, system 322 may include pumps, valves, multiple separate lines, return lines, or various other components, such as described below herein with regard to example systems.

Separator system 320 is configured to allow two or more components in the fuel mixture stored in tank 310 to be separated and provided separately to engine 10, thereby permitting the advantages of dual or mixed injection strategies to be employed without causing inconvenience to a user. In one example, the separator system utilizes an aqueous extraction to remove fuel components soluble in water (such as methanol, ethanol, etc.) from fuel components not soluble in water. For example, an extraction fluid (e.g., water) may be added to a gasoline/alcohol mixture, and the mixture drawn off at different levels, where the lower level provides an alcohol enriched substance. In another example, a barrier in a tank may be used, where the barrier is made at least partially of a material or materials that selectively transports one component of the mixed fuel at a higher rate than, or even to the substantial exclusion of, the other component of the mixed fuel. In still another example, the barrier may be an ionically or electrically conductive polymeric or inorganic material, polypyrole being one example of a conductive polymer. A voltage and/or current may be applied across and/or through the membrane using a voltage and/or current supply, respectively. In this way, substances may be extracted at different rates and/or concentrations, for example.

Continuing with Figure 3, it also shows downstream transport system 322 located between separator 320 and the engine (not shown). Transport system 322 is shown having at least two separate lines coupled to the separator to transport different amounts of substances with different constituents to the engine depending on operating conditions. Transport system 322 may maintain the different substances separate in delivering the substances to the engine, or may mix the substances for co-delivery to the engine, as illustrated in Figure 3. Further, like system 316, system 322 may include pumps, valves, multiple separate lines, return lines, or various other components, such as described below herein with regard to example systems

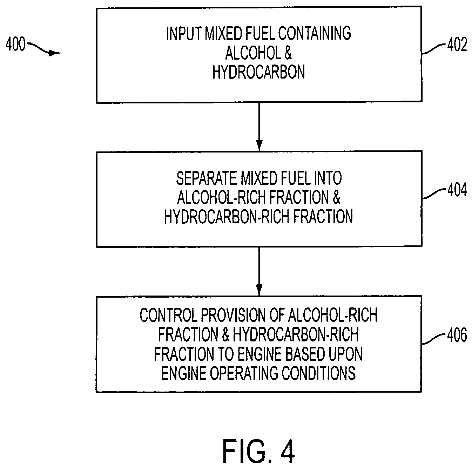

Figure 4 illustrates one exemplary embodiment of a method 400 of operating engine 10 via a fuel separation/mixed injection strategy. First, method 400 includes inputting a mixed fuel into tank 310, or receiving the mixed fuel into the tank. In the embodiment of Figure 4, the mixed fuel contains a hydrocarbon component (such as gasoline) and an alcohol component (including but not limited to ethanol or methanol). However, it will be appreciated that any suitable mixed fuel may be used, including but not limited to other polar and/or oxygenated fuels such as ethers and esters and other nonpolar and/or hydrocarbon fuels such as diesel.

Next, method 400 includes separating, at 404, the mixed fuel into a hydrocarbon-enriched fraction and an alcohol-enriched fraction. As used herein, the terms "hydrocarbon-enriched" refers to the volume of fuel after separation from which either the alcohol was removed, or the volume of fuel containing hydrocarbons removed from the mixed fuel, depending upon whether the separator is configured to extract the hydrocarbon or alcohol components. Likewise, the term "alcohol-enriched" refers to the volume of fuel after separation from which either the hydrocarbon was removed, or the volume of fuel containing alcohols (or other oxygenated or polar fuels) removed from the hydrocarbon portion of the mixed fuel, depending upon the separation mechanism employed. It will be appreciated that the relative concentrations of the alcohol and hydrocarbon components of the "hydrocarbon-enriched" or "alcohol-enriched" fractions may be either higher or lower than the other respective component of those fractions. Furthermore, the term "fraction" is used herein merely to denote a volume of fuel after a separation process, and does not imply that any particular type of separation process is employed.

After separating the mixed fuel into at least the alcohol-enriched and hydrocarbon-enriched fractions, method 400 next includes controlling the provision of fuel from the alcohol-enriched fraction and fuel from the hydrocarbon-enriched fraction to engine 10 based upon an engine operating condition. For example, if engine knock is detected, a greater relative amount of fuel from the alcohol-enriched fraction may be provided to reduce knock. Furthermore, in a fuel system with more than two inputs, water may be added from a third input to help prevent pre-ignition. Alternatively, the alcohol-enriched fraction may contain a quantity of water to help prevent pre-ignition. As another example, a greater relative amount of fuel from the hydrocarbon-enriched fraction may be provided to the engine as an engine load increases, thereby providing a greater amount of energy to the engine. It will be appreciated that these are merely exemplary methods of controlling the provision of the alcohol-enriched fuel fraction and the hydrocarbon-enriched fuel fraction to engine 10, and that the relative amounts (or ratio) of fuels from these fractions may be adjusted based upon any other suitable engine operating conditions or for any other suitable purpose. Other examples include, but are not limited to, the reduction of emissions and/or the enhancement of fuel economy.

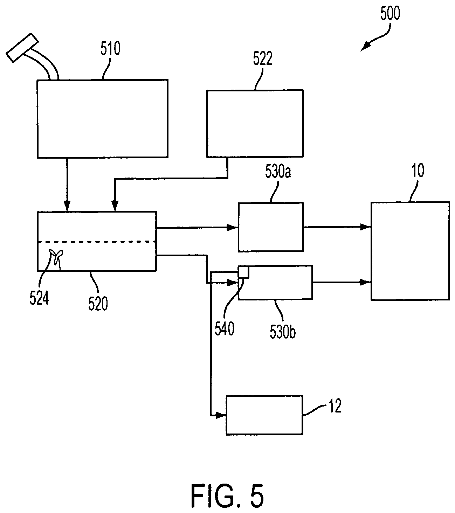

Any suitable methods and/or structures may be used to separate a mixed fuel in a fuel system according to the present disclosure. For example, in some embodiments, an aqueous extraction may be used to remove fuel components soluble in water (such as methanol, ethanol, etc.) from fuel components not soluble in water. Figure 5 shows, generally at 500, an exemplary embodiment of a fuel system having an aqueous extraction system for separating an alcohol (or other polar fuel component) from a hydrocarbon fuel component. Fuel system 500 includes a fuel tank 510 for receiving a fuel input by a user, and an extraction tank 520 in fluidic communication with and configured to receive mixed fuel from tank 510. As used herein, the term "in fluidic communication with" (and variations thereof) refers to the existence of a fluid path between components, and neither implies nor excludes the existence of any intermediate structures or components, nor implies that a path is always open or available for fluid flow.

Fuel system 500 also includes an extraction fluid source 522 in fluid communication with extraction tank 520 for the extraction of a fuel component from the mixed fuel. Extraction fluid source may be configured to provide any suitable extraction fluid to extraction tank 520 in any suitable manner. Suitable extraction fluids include those fluids which are miscible with the component or components of the mixed fuel to be extracted and are immiscible with the component or components of the mixed fuel not to be extracted. Where the mixed fuel contains a lower alkyl alcohol and gasoline, an example of a suitable extraction fluid is water. In one embodiment, extraction fluid source 522 includes a holding tank to which water may be periodically added, for example, by a user or during a vehicle servicing. Alternatively, extraction fluid source 522 may include a condenser that condenses water vapor from air, exhaust, etc. For example, a collector may be located within or coupled to an air-conditioning unit in order to collect condensed water.

Extraction tank 520 may include a mixer or agitator (depicted schematically at 524) to ensure that the extraction fluid and mixed fuel are well mixed for the extraction process. Alternatively, extraction tank 520 may not include a mixer, and instead may rely on momentum changes in driving (for example, hitting bumps, acceleration/deceleration, etc.) to help mix the extraction fluid and the mixed fuel. Furthermore, in an alternative embodiment, extraction fluid may be added to the mixed fuel in a conduit that is upstream from and leads to the extraction tank. The fluids may mix while flowing in the conduit and upon entering the extraction tank 520. In either of these embodiments, after mixing, the fluids may be allowed to separate while in the extraction tank. After mixing, the aqueous phase containing the alcohol-enriched fraction settles to the bottom of extraction tank 520 and the hydrocarbon-enriched fraction rises to the top of the alcohol-enriched fraction. To separate the two fractions, a first outlet for the alcohol-enriched fraction may be provided at a location in extraction tank 520 at a level above the border between the alcohol-enriched fraction and the hydrocarbon-enriched fraction to allow the hydrocarbon-enriched fraction to be removed, and a second outlet may be provided at a level below this border (for example, at the bottom of extraction tank 520) to allow the alcohol-enriched fraction to be removed.

After removal from extraction tank 520, either or both of the hydrocarbon-enriched fraction and the alcohol-enriched fraction may be stored in a storage tank (shown at 530a and 530b, respectively) before being provided to engine 10. Alternatively, either or both of the hydrocarbon-enriched fraction and the alcohol-enriched fraction may be provided directly to engine, without storage in a storage tank, via injectors 66A, 66B or via intake manifold 44. A sensor 540 may be provided in communication with controller 12 to output a signal proportional to an amount of alcohol present in the extraction fluid. From this signal, controller 12 may determine a calorie content per unit volume of the alcohol-enriched fraction for use in controlling the addition of the two fuel fractions to the engine. Suitable sensors for use as sensor 540 include, but are not limited to, refractive index sensors.

As one example, the relative amounts of separate substances delivered to the engine may be varied depending on the composition of the hydrocarbon-enriched fraction and the alcohol-enriched fraction generated by the separator. In this, it may be possible to provide consistent levels of knock reduction while also providing desired engine torque, thus compensating for variation in caloric content and knock suppression effectiveness.

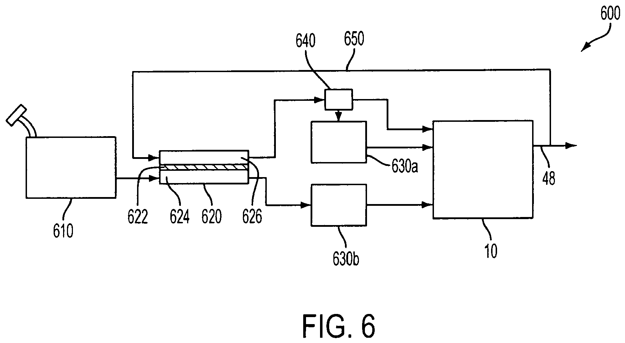

Figure 6 shows, generally at 600, another exemplary embodiment of a fuel system and separator. Fuel system 600 includes a fuel tank 610, a separator 620, a first fuel fraction storage tank 630a, a second fuel fraction storage tank 630b, and a condenser 640. Fuel system 600 also includes an exhaust gas recirculation (EGR) tube 650 configured to recirculate exhaust gases from the engine exhaust manifold 48 into separator 620. Exhaust gas recirculation tube 650 may be the same as exhaust gas recirculation tube 170 shown in Figure 2, or may be a separate tube or a branch of tube 170.

Separator 620 includes a barrier 622 separating a first passageway 624 from a second passageway 626. Barrier 622 is made at least partially of a material or materials that selectively transports one component of the mixed fuel at a higher rate than, or even to the substantial exclusion of, the other component of the mixed fuel. The extracted fuel component crosses barrier 622 into second passageway 626, while the unextracted fuel components remain in first passageway 624. In this manner, a first fuel fraction (either hydrocarbon-enriched or alcohol-enriched, depending upon whether the materials used for barrier 622 selectively pass hydrocarbons or alcohols) may be collected at the outlet of first passageway, and a second fuel fraction may be collected at the outlet of the second passageway. The recirculated exhaust gases provided by exhaust gas recirculation tube 650 may be directed to flow across the opposite side of barrier 622 as the mixed fuel input, thereby transporting fuel components that diffuse through barrier 622 away from barrier 622. This may improve the rate of fuel transport across the barrier. Furthermore, the recirculated exhaust gas also may be used to heat the separator, which may also help to drive the pervaporation of the extracted fuel component across the membrane, thereby increasing fuel transport rates across barrier 622.

Condenser 640 may be used to condense the extracted fuel component out of the recirculated exhaust gas stream after pervaporation, along with water vapor and any other condensable exhaust components. The condensed extracted fuel may then be collected in first fuel fraction storage tank 630a for later use by engine 10. The recirculated exhaust gases may also be provided to an intake manifold of engine 10 as shown in Figure 6, or may be emitted from the engine as exhaust. It will be appreciated that the recirculated exhaust gas may be directed through other components either before or after flowing through the separator. One example of such other components is an EGR cooler, which may be positioned either upstream or downstream of separator 620.

Barrier 622 may be formed from any suitable material or materials. Suitable materials include materials that selectively pass one type of fuel within the mixed fuel to the exclusion or substantial exclusion of the other type or types of fuels in the mixed fuel, that pass one type of fuel at a higher rate than the other types of fuels, or that possess any other property that allows the enrichment of a selected fuel type within the mixed fuel. Selectivity may be based upon any suitable differences in physical properties between the desired fuel components. Examples include, but are not limited to, relative polarities of the fuel components, chemical reactivity and/or surface absorption characteristics of the fuel components with the surfaces of the selective material, the molecular size of the fuel components relative to a pore size of the selective material, and combinations of these properties.

In one embodiment, the barrier 622 comprises a material with a chemical or physical affinity for a selected fuel component in the mixed fuel. For example, where the mixed fuel includes ethanol (or other lower alcohol) and gasoline, a polymeric material with an affinity for polar molecules may be used to selectively transport the ethanol molecules to the substantial exclusion of hydrocarbons. Examples of suitable polymer materials with selectivity for lower alcohols such as methanol, ethanol and propanol include, but are not limited to, polyvinyl alcohol, polysulfone, poly(ether ether ketone), polydimethyl siloxane, and cellulose triacetate. These materials may show selective transport over polar molecules over the hydrocarbon components of gasoline, which tend to show more nonpolar behavior. Such materials may also be effective in selectively transporting other oxygenated or polar fuel components that may be used in a mixed fuel, such as ethers and esters. In some embodiments, the polymer material may be supported by a ceramic, metal or other rigid support on which the polymer is deposited as a thin or thick film. In other embodiments, the polymer material may comprise the bulk of the selective barrier.

In another embodiment, selective barrier 622 may include a material that selectively passes a lower alcohol component of a mixed fuel over a hydrocarbon component based upon size selectivity. The smallest majority components in gasoline may include isooctane and heptane, and other small components found in lower concentrations may include branched and cyclic hexanes, pentane and butane. In comparison, ethanol is smaller than these hydrocarbons. Therefore, a porous material such as a zeolite or other porous metal oxide, or even porous metals, may be used to transport the smaller ethanol molecule at a higher rate than the larger hydrocarbons. Any suitable porous material may be used. In one specific embodiment, zeolite-Y may be used. Furthermore, the pores of the metal oxide may be chemically modified to change or enhance the selective transport properties of the material. For example, where the porous material is a zeolite, ion exchange may be used to increase the polarity and/or modify the acidity within the pores to enhance the transport of alcohols through the material. Likewise, if it desired to extract the hydrocarbons, rather than alcohols, from a mixed fuel, an alkyl siloxane or other siloxane having organic functional groups may be chemically reacted with the silicon oxide sites within the zeolite pores. In this manner, the siloxy groups of the organic siloxane may chemically bond to the zeolite within the pores, and the organic functional groups form a nonpolar surface, thereby allowing nonpolar molecules to diffuse through the material while inhibiting the transport of polar materials. Such a surface modification may also be used to decrease an amount of the transported fuel component that remains adsorbed to the surfaces of the pores, rather than being transported through the pores. Likewise, the pores may be coated with a polymer material that has an affinity for either the polar or nonpolar components of the mixed fuel. Examples of polymer coatings that may enhance the selectivity of a material to pass an alcohol to the substantial exclusion of a nonpolar hydrocarbon include, but are not limited to, polyvinylalcohol, polydimethyl siloxane, poly (amide-b-ether) copolymer, polyether sulfone, and poly (ether ether ketone). It will be appreciated that these are merely examples of potential porous materials and modifications that can be made to the porous materials, and that any other suitable materials and/or material modifications may be used.

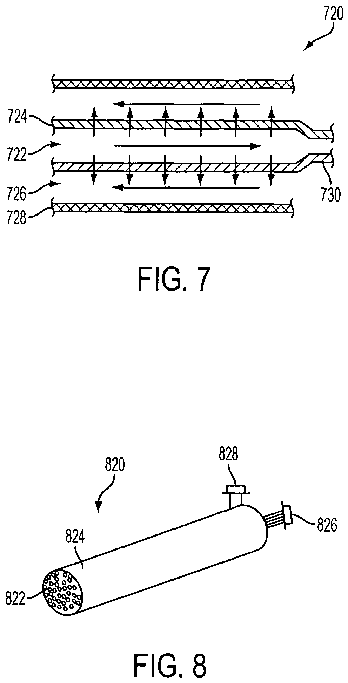

Separator 620 may have any suitable configuration for performing the separation of the mixed fuel. Figure 7 shows, generally at 720, one exemplary embodiment of a suitable separator configuration. Separator 720 includes an inner passageway 724 defined by a selective barrier 722, and an outer passageway 726 defined by an outer wall 728. Inner passageway 724 may be configured to receive a flow of mixed fuel from a fuel tank. As illustrated by the arrows in Figure 7, the extracted component of the mixed fuel is transported across the membrane from the inner passageway to the outer passageway.

Inner passageway 724 may include a restriction 730 or narrowing to slow fluid flow through inner passageway 724 and to increase the pressure of the mixed fuel on the selective barrier 722. This may help to improve transport rates and recovery yields of the extracted fuel component. Additionally, pumps and/or other components may be used to provide additional pressure control to optimize the pressure of the mixed fuel in the separator to promote transport of the desired fuel component across the selective barrier. Such systems may allow the pressure be adjusted from atmospheric pressure (ambient pressure) to several thousand pounds per square inch.

The extracted fuel component may be recovered in outer passageway 728 as a liquid, or as a gas where barrier 722 is a pervaporation membrane. Where the extracted fuel component is recovered as a gas, it may be converted to a liquid phase for storage in a condenser as illustrated in Figure 6, or may be provided to an injector or intake manifold in the gas phase without condensation. Furthermore, as illustrated in Figure 6, recirculated exhaust gas may be directed through outer passageway 728 to heat separator 720 and/or to help collect extracted fuel components, thereby increasing fuel transport rates through selective barrier 722. Alternatively, another extraction fluid, such as water from a storage reservoir or condenser, may be flowed through outer passageway 728 to collect the extracted fuel component and to help increase transport rates. In these embodiments, the water or other extraction fluid may be heated before passing through separator 720, or separator 720 may be heated from another source (for example, an electrical heater or recirculated exhaust gas flowed around the exterior of separator 720).

The recirculated exhaust gases (or other extraction fluid) may be passed through outer passageway 728 in a direction opposite the flow of the mixed fuel through inner passageway 724 as illustrated in Figure 7, or may be flowed through in a similar direction. Furthermore, in an alternate embodiment, the mixed fuel may be provided to outer passageway 728, and the recirculated exhaust gas or other extraction fluid may be provided to the inner passageway. In these embodiments, outer passageway 728 may include a restriction to slow the flow of the mixed fuel and to increase the pressure of the mixed fuel on selective barrier 722. The restriction may be adjustable in diameter, circumference and/or cross-sectional area to allow the pressure of the mixed fuel on the selective barrier 722 to be adjusted as desired.

Figure 8 shows another exemplary embodiment of a separator, generally at 820. Instead of having a single tubular selective barrier surrounded by an outer wall, separator 820 includes a plurality of tubular selective barriers 822 defining a plurality of inner passageways. The plurality of tubular barriers 822 are contained within a single tubular outer wall 824, which defines a single outer passageway. A first input 826 is provided for flowing a fluid through the plurality of tubular barriers 822, and a second input 828 is provided for flowing a fluid through the interior of tubular outer wall 824 and around the exteriors of the plurality of tubular inner barriers 822. In this manner, the surface area of the selective transport barrier may be increased relative to the embodiment of Figure 6. Examples of such extraction systems include water-permeable selective barriers sold under the trade name PERMAPURE by Permapure, LLC of Toms River, New Jersey.

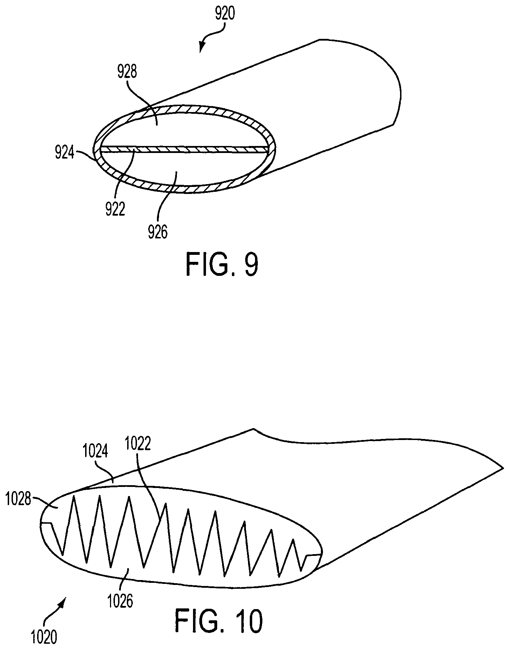

Figure 9 shows another exemplary embodiment of a separator, generally at 920. Separator 920 includes a selective barrier 922 and an outer wall 924 that divides an interior defined by the outer wall into a first passageway 926 and a second passageway 928. Selective barrier 922 takes the form of a linear membrane disposed across the interior of outer wall 924. Mixed fuel may be provided to one of first passageway 926 and second passageway 928, and an extracted fuel component may be recovered from the other of first passageway 926 and 928. Depending upon the material used for selective barrier 922, selective barrier 922 may include a rigid support material (for example, a metal or ceramic material) that supports the selective barrier material. Such a rigid barrier material may help to support the selective barrier material against elevated pressures that may be used in the fuel separation process. In other embodiments, the selective barrier material may be sufficiently strong and rigid to allow the omission of a support.

Figure 10 shows another exemplary embodiment of a separator, generally at 1020. Separator 1020 is similar to the other embodiments described above in that it includes a selective barrier 1022 and an outer wall 1024 that divides an interior defined by the outer wall into a first passageway 1026 and a second passageway 1028. However, selective barrier 1022 takes the form of a folded or pleated barrier, instead of a linear barrier. Mixed fuel may be provided to one of first passageway 1026 and second passageway 1028, and an extracted fuel component may be recovered from the other of first passageway 1026 and 1028. The use of a folded or pleated barrier as opposed to a linear barrier may help to increase the surface area of the selective barrier, and therefore may help to increase fuel separation rates. It will be appreciated that a folded or pleated barrier may also be used in conjunction with a tubular barrier structure such as those shown in the embodiments of Figs. 7 and 8.

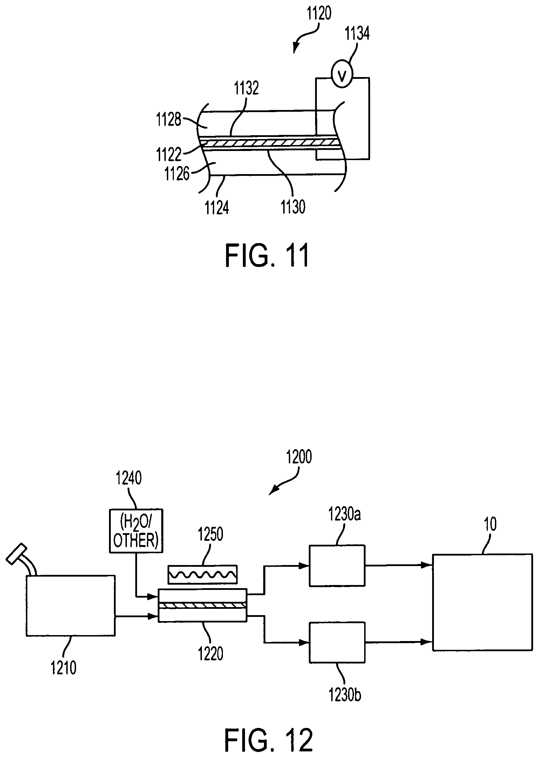

Figure 11 shows another exemplary embodiment of a separator, generally at 1120. Separator 1120 includes a selective barrier 1122, an outer wall 1124, and a first passageway 1126 and second passageway 1128 separated by the selective barrier. Separator 1120 also includes a first electrode 1130 and second electrode 1132 positioned on opposite sides of selective barrier 1122. Furthermore, selective barrier 1122 may be made at least partially of an ionically or electrically conductive polymeric or inorganic material, polypyrole being one example of a conductive polymer. A voltage and/or current may be applied across and/or through the membrane using a voltage and/or current supply 1134, respectively. In this embodiment, an ionic current could be induced across a membrane using the polarizable properties of an alcohol moiety. Furthermore, the hydroxide functional group may be induced to give up a proton during transport, creating an oxyanion that would be selectively transported by polar interaction with cationic functional groups on the surface and interior of the porous membrane material, and/or by the motion of the charged ethoxy anion in response to the applied electric field. In the depicted embodiment, electrodes 1130 and 1132 are shown as covering substantially the entire lower and upper surfaces of selective barrier 1122, respectively. However, it will be appreciated that electrodes of any suitable configuration and/or placement may be used to electrochemically or electrophoretically move a selected mixed fuel species across a selective membrane.

Figure 12 shows another exemplary embodiment of a fuel system, generally at 1200. Fuel system 1200 includes a fuel tank 1210, a fuel separator 1220, and first and second fuel fraction storage tanks for storing the enriched fuel fractions after separation and before provision to engine 10. Fuel system 1200 also includes an extraction fluid storage tank 1240 and a separator heater 1250. This is in contrast to the above-described embodiments where recirculated exhaust gases are utilized as an extraction fluid and as a heat source for heating the separator. Any suitable fluid may be used as the extraction fluid. For example, in some embodiments, the extraction fluid may comprise water that is either added to storage tank 1240 by a user on a periodic or occasional basis, and/or may comprise a condenser that is configured to condense water vapor from air to collect water for use as an extraction fluid. Furthermore, extraction fluid storage tank 1240 may comprise a storage tank conventionally utilized in vehicles for storing aqueous fluids. For example, in one embodiment, fluid storage tank 1240 comprises a windshield washer fluid tank from which fluid is drawn for washing a vehicle windshield and for extracting/removing the transported fuel component from separator 1220 after fuel separation.

Heater 1250 may optionally be utilized where it is desired to heat the separator, for example, to improve the transport rate of the desired fuel component across the selective barrier, and/or to cause the separated fuel component to be recovered in the gas phase in separator 1220 (i.e. to utilize a pervaporation separation). Any suitable heat source may be used as heater 1250. Examples include, but are not limited to, electric heaters, radiative heating from the engine, recirculated exhaust gases, and/or combinations of these heat sources.

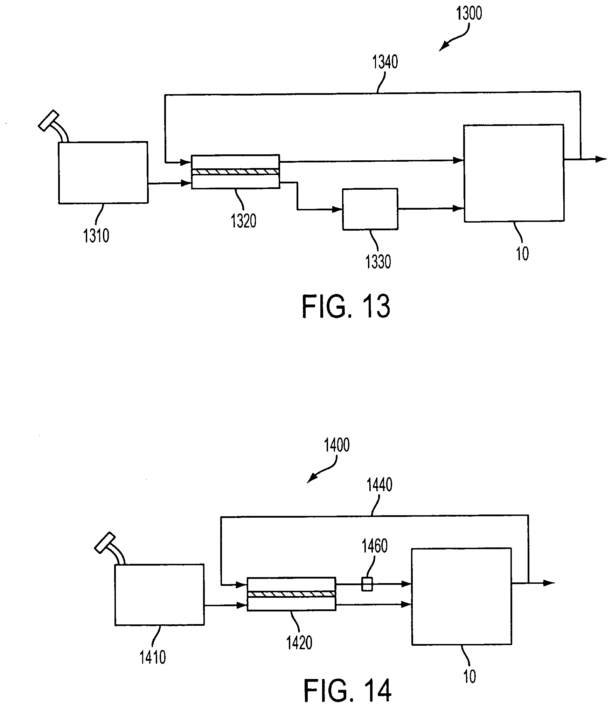

Figure 13 shows another exemplary embodiment of a fuel system, generally at 1300. Fuel system 1300 includes a fuel tank 1310, a fuel separator 1320, an exhaust gas recirculation system 1340 for heating the separator and/or recovering the extracted fuel species from the separator. However, fuel system 1300 includes only a single fuel fraction storage tank 1330, instead of two fuel fraction storage tanks. The other fuel fraction (for example, a pervaporated fuel fraction carried by the recirculated exhaust gas) is instead provided directly to engine 10, without condensation and storage. This fuel fraction may be provided to a direct injector, port injector, and/or intake manifold. It will be appreciated that various structures for controlling the flow of the gas phase fuel fraction into engine 10 may be utilized, including but not limited to a fuel pump, fuel rail, sensors for detecting a calorie content of the gaseous mixture, pressure sensors, etc.

Figure 14 shows yet another exemplary embodiment of a fuel system, generally at 1400. Fuel system 1400 includes a fuel tank 1410, a separator 1420, and an exhaust gas recirculation system 1440 for heating the separator and/or recovering the extracted fuel species from the separator. However, fuel system 1440 does not include fuel fraction storage tanks disposed between the separator and engine 10. Instead, both fuel fractions are provided directly to the engine. Either or both fuel fractions may be provided to any suitable injector and/or may be provided directly to the intake manifold as a gaseous mixture where suitable.

As mentioned above, where the selective barrier utilizes pervaporation or produces a vaporous mixture of fuel as a product of the extraction, the fuel vapor may be delivered directly to a gaseous injector, or may be delivered into the intake manifold as a mixture with air or a combination of air and recirculated exhaust gases, and therefore back into the combustion chamber. In these embodiments, to help provide better control of combustion by determining the amount of fuel being delivered to the combustion chamber, an air/fuel ratio measurement could be made using a device, such as an universal exhaust gas oxygen sensor (shown, for example at 1460 in Figure 14) or another suitable device to determine the fuel content of the gases being supplied to the injector or the intake manifold. The signal from this device may be used in a feedback control loop configuration and would modify the flow of either the gaseous fuel or the amount of air metered into the mixture entering the combustion chamber, as is conventional in the control of internal combustion engines.

In any of the embodiments described above, it may be desired to control the operation of the separator, for example, to adjust a quantity of fuel being separated in response to engine operating conditions. For example, in some situations, it may be desirable to reduce an amount of alcohol that is extracted from a hydrocarbon fuel. Where the selective barrier is configured to selectively transport an alcohol, the transport of alcohol may be slowed, for example, by reducing a temperature of the separator, by decreasing a flow of extraction fluid through the separator, by decreasing the pressure of the mixed fuel in the separator, or in any other suitable manner. Likewise, the transport rate of alcohol across the barrier may be increased, for example, by increasing a temperature of the separator, by increasing a flow of extraction fluid through the separator, by increasing a pressure of the mixed fuel in the separator, or in any other suitable manner. Likewise, where the selective barrier is configured to selectively transport a hydrocarbon, the rate of hydrocarbon transport may be adjusted in like manners. Furthermore, a bypass line (not shown) that bypasses the separator may be provided for use in situations in which it is desired not to separate the mixed fuel. Furthermore, separation may also be controlled by providing a mechanism for selectively opening or closing the second passageway of any of the embodiments of Figures 6-14 (where the extracted component is removed from the separators). Where the passageway is closed from the conduits to which it is connected, the vapor pressure and/or concentration of the extracted fuel component may increase, which may slow and eventually stop the transport of the extracted fuel component across the barrier. It will be appreciated that the performance of the separators may be adjusted in response to any suitable event or condition, including but not limited to, changing engine load, emissions conditions, different rates of consumption of the different fuel fractions, etc.

In some embodiments, the performance of a separator may be monitored to provide a greater degree of control over the separator. The performance of the separator may be monitored in any suitable manner. For example, a separation rate may be inferred or calculated from variables such as the temperature of the separator, the flow rate of the mixed fuel into the separator, the pressure of the mixed fuel within the separator, the composition of the mixed fuel, and/or the pressure and/or flow rate of recirculated exhaust gases (or other extraction fluid) within the separator. Furthermore, the separation rate also may be calculated by measuring the caloric content (for example, via a UEGO sensor) of the extracted fluid, and/or by optically measuring an alcohol content of a liquid-phase extraction fluid, where the extracted fluid is an alcohol. It will be appreciated that these are merely exemplary methods of monitoring, calculating or estimating a performance of a separator, and that any suitable method may be used.

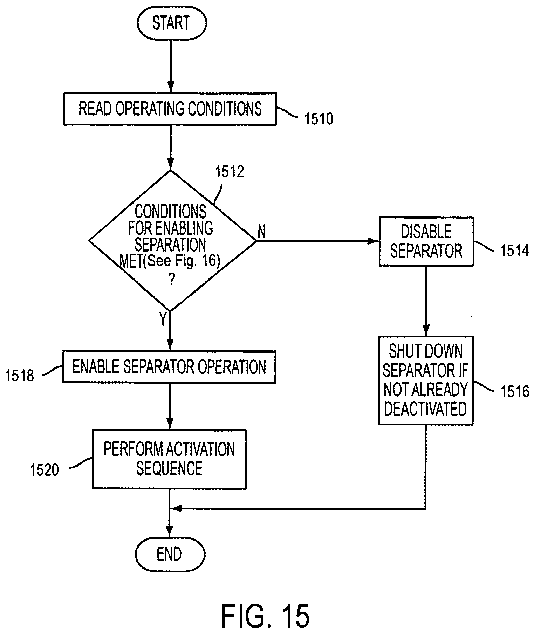

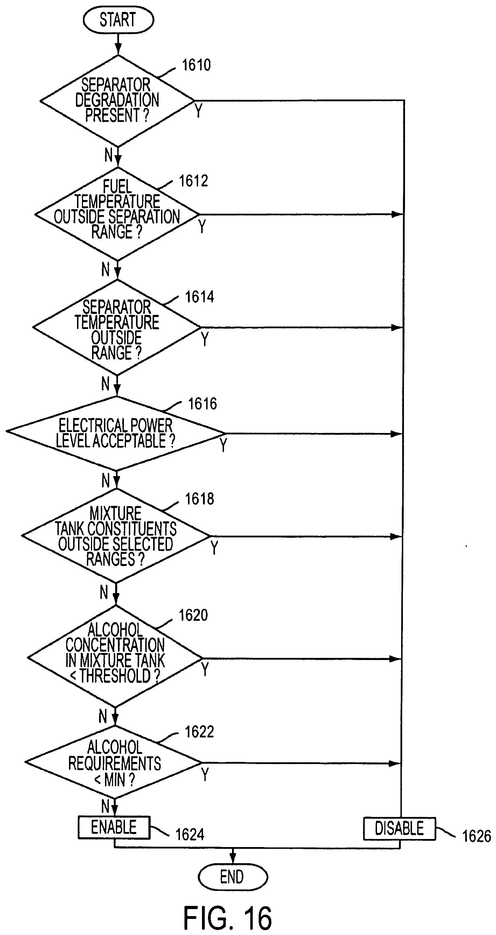

Referring now to Figures 15-16, example routines for controlling system operations are provided, in particular for enabling and controlling separator operation. In 1510, the routine reads operating conditions, such as those noted below in Figure 16. Then, in 1512, the routine determines whether conditions for enabling separator operation are met. Various conditions may be used to enable/disable separate operation, such as those noted with regard to Figure 16. If the answer to 1512 is no, the routine continues to 1514 to disable separator operation and then to showdown the separator in 1516 if it is not already deactivated. The shutdown may be a gradual shutdown, or may be adjusted depending on the operating conditions. For example, under some conditions, a more rapid shutdown may be used than other conditions.

If the answer to 1512 is yes, the routine continues to 1518 to enable separator operation. Then in 1520, the routine performs an activation sequence to activate the separator if it is not already active. The activation sequence may include warm-up operation to initiate separation, and may be adjusted depending on engine, vehicle, and/or ambient operating conditions. For example, the separator may have a more rapid activation sequence under warmer ambient conditions.

Referring now to Figure 16, details of the separator enablement are described. While the following conditions may be used to enable/disable separator operation, various other, or alternative combinations of these parameters may be used. In 1610, the routine first determines whether separator degradation has occurred or been detected. Degradation may be detected in a variety of ways, such as based on measured separator operation compared to expected operation for a given set of conditions. For example, the routine may monitor separator performance, fuel separation rate, fuel separation percentage yield, or various others. If the answer to 1610 is no, the routine continues to 1612 to determine whether fuel temperature is outside a range for separator operation. The range may vary with operating conditions such as an estimate of fuel types in the tank or separator, relative fuel quantities, in the tank or separator, or various others.

If the answer to 1612 is no, the routine continues to 1614 to determine whether the separator and/or any of its components are outside a temperature range for separator operation. Again, the range may vary with operating conditions such as an estimate of fuel types in the tank or separator, relative fuel quantities in the tank or separator, engine operating conditions, or various others.

If the answer to 1614 is no, the routine continues to 1616 to determine how in the case of an electrically actuated separator, electrical power related values compare to acceptable values or thresholds. For example, the routine may determine whether the amount of energy used by the separator in separating the current fuel under the current conditions is less than a threshold value. Alternatively, the routine may consider vehicle battery voltage, state of charge, and/or electrical power generation conditions. For example, if battery voltage or state of charge is above a threshold valve, separator operation may be enabled.

If the answer to 1616 is no, the routine continues to 1618 to determine whether tank fuel mixture constituents are outside selected ranges in which separator operation is performed. For example, if a certain constituent to be separated is below a certain relative amount in the incoming fuel, separation may be disabled due to low yields. Alternatively, if another constituent is above a threshold valve, separation may be disabled due to interference in separation performance.

If the answer to 1618 is no, the routine continues to 1620 to determine whether, in the case of alcohol separation, an alcohol concentration in the fuel tank mixture is less than a threshold value. For example, if the amount of alcohol in the mixture is below a threshold, separation may be disabled due to low alcohol availability.

If the answer to 1620 is no, the routine continues to 1622 to determine whether, in the case of alcohol separation, alcohol requirements are less than a threshold value. For example, if the engine and/or vehicle are operating under conditions in which a separated alcohol mixture is not needed, or only minimally needed, separation may be disabled. In one example, if the engine coolant temperature is less than a minimum temperature (e.g., during a cold start), the separated mixture may not be used, and thus the separator may be disabled. Likewise, if the separated mixture is delivered via a separate injection system that has degraded, separator operation may be disabled.

From a yes answer to any of 1610 through 1622, the routine continues to 1626 to disable separation. Alternatively, if the answer to 1622 is no, the routine continues to 1624 to enable separator operation. In this way, it is possible to provide appropriate operation of the separator in the context of vehicle operation and degradation over vehicle life.

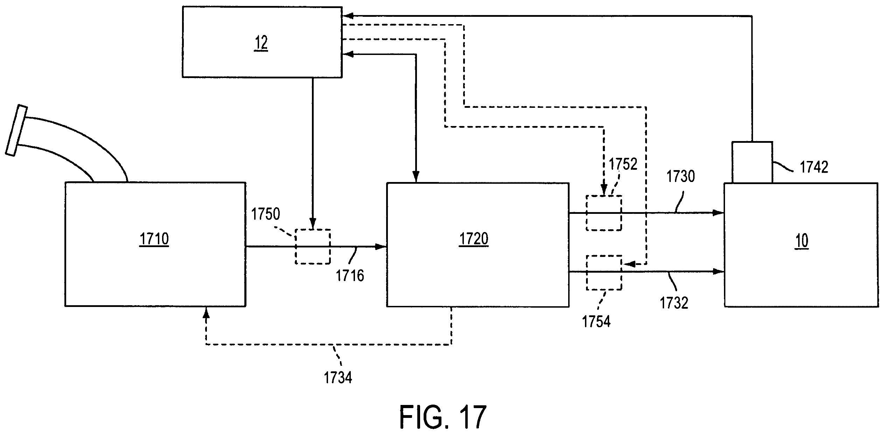

Referring now to Figures 17, 19, and 21, example fuel systems are illustrated, along with associated control routines for separator and/or engine control.

Specifically, Figure 17 illustrates an example fuel system layout in which a separator 1720 is used to separate at least ethanol from a fuel mixture in tank 1710 having at least gasoline and ethanol. In one example, the separator may receive as an input a gasoline/ethanol mixture 1716 with a first ethanol concentration and generate two output gasoline/ethanol mixtures (1730, 1732), one with a second ethanol concentration and one with a third ethanol concentration. In one example, the third ethanol concentration is higher than the first ethanol concentration, which is higher than the second ethanol concentration. The two outputs mixtures are fed to engine 10, for example, output 1730 may be fed to a port fuel injector (e.g., 66A) and output 1732 may be fed to a direct injector (e.g., 66B).

In one example, a pump 1750 may be provided to pressurize the mixture 1716, shown in dashed lines. In addition, or alternatively, pumps 1752 and 1754 may be provided in 1730 and 1732, respectively. The pump(s) may be controlled via controller 12, which also receives various inputs, such as information from sensor(s) 1742. Further, controller 12 may control separator 1720, in addition to engine and/or vehicle operation.

For the example system of Figure 17, it may advantageously be used in the case that the separate can generate sufficient quantities of a higher alcohol concentration fuel mixture to handle a substantial portion of engine and/or vehicle operation, and as such an additional storage tank for one or both of mixtures 1730 and 1732 is not required (although it may be added, if desired).

In this case, one optional control strategy for the separator may include operating the separator at various production/generation rates and/or concentrations depending on engine fueling requirements and operating conditions. In one embodiment, the controller may operate the separator in a manner sufficient to produce a required alcohol amount for the current engine operating conditions or current engine fueling demand. The current engine demand could be determined from the engine controller, or calculated from injector pulse width and fuel pressure. Alternatively, feedback control of fuel pressure or another parameter could be used to supply enough production to meet demand and maintain pressure.

For example, in the case where the mixture in 1732 has a higher alcohol concentration than that of 1730, the separator may be controlled in response to which mixture is limiting. In other words, in the case where mixture 1732 is being used faster than generation/separation, the separator may be adjusted to increase the amount of mixture 1732. Likewise, in the case where mixture 1730 is being used faster than generation/separation, the separator may be adjusted to increase the amount of mixture 1730. In these cases, return lines (not shown) may be used to return excess amounts of mixtures 1730 and/or 1732 to tank 1710.

If the separator transient response is slower than required for the engine, feed forward controls can be used, where a predicted demand is calculated based on current and/or past operating conditions, as well as adaptive learning, for example. In another example, this may involve predictions of future engine demand based on recent demand, earlier patterns of demand, fuzzy logic, etc. Alternatively, the separator could always operate at a higher rate than currently necessary (with unused ethanol returned to the tank via optional return line 1734). The amount of excess separation could also be varied based on operating conditions such as recent demand, earlier patterns of demand, fuzzy logic, etc. In still another alternative, the amount of excess separation/generation could be a function of current demand for mixture 1732, engine speed/load/temperature, and/or combinations thereof.

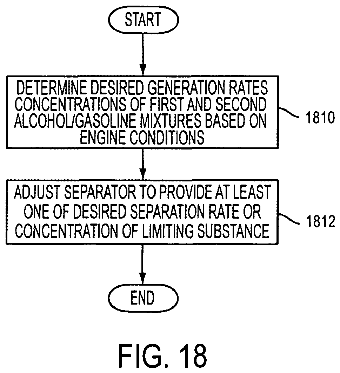

The level of detail in control adjustments and/or accuracy desired may depend on parasitic losses of the ethanol separator. For example, in the case of an electrically actuated/powered separator, if the separator electric power or other input requirements are relatively low (e.g. less than a threshold value), the separator may operate whenever the engine is running, or with simple on/off control whenever some ethanol is demanded. However, if parasitic losses are greater, two or three level modulation of the separator may be used. Further, if parasitic losses are still greater, then the more detailed enablement of Figure 16 may be used, along with the varying operation of Figure 18 may be used to reduce the losses by operating with reduced excess separation and with the level of separation matched to current and/or future predicted operating conditions.

Specifically, with regard to Figure 18, a routine is described for controlling separator operation, such as for the configuration of Figure 17. In 1810, the routine determines a desired generation rate of a first and second mixture from the separator based on operating conditions, such as engine demand, fueling demand, driver input, and/or combinations thereof as noted above herein. Further, in addition to a desired generation rate, the routine may also determine a desired concentration of the output mixtures. In addition, the routine may determine which desired rate is limiting the generation rates of multiple output mixtures which are interdependent. Then, in 1812, the routine adjusts the separator to provide at least one of the desired generation rates (or concentrations) of the limiting mixture.

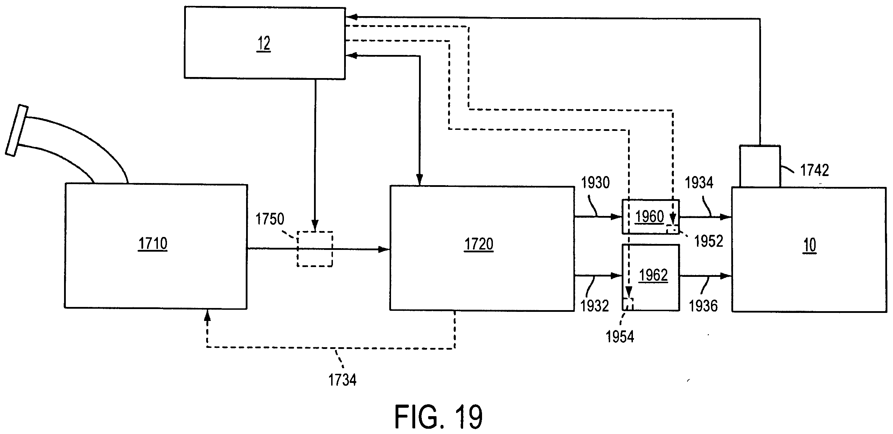

Referring now to Figure 19, another example fuel system is provided similar to that of Figure 17, except that each of two output mixtures 1930 and 1932 having respective storage tanks 1960 and 1962 to enable buffering of the generation rate from the engine usage rate. In this way, it is possible to provide more consistent generation rate and thereby improve generation efficiency under selected conditions. Specifically, in Figure 19, two storage tanks 1960 and 1962 (each having an optional pump 1952 and 1954 therein, respectively) receive outputs from separator 1720 via lines 1930 and 1932, respectively, and provide mixtures 1934 and 1936 to engine 10. As noted above, the mixture of 1934 may be fed to a port injector of a cylinder, and the mixture of 1936 may be fed to a direct injector in a cylinder in engine 10.

Due to the ability to store both of the generated mixtures, with this fuel system it may be possible to control separator 1720 to provide improved generation efficiency, while also providing sufficient generation to maintain sufficient fuel mixtures in both tanks 1960 and 1962.

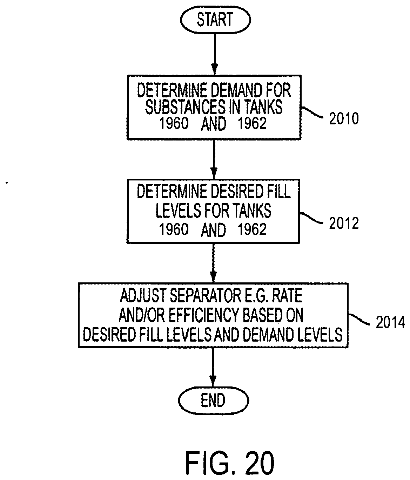

Referring now to Figure 20, a routine is described for controlling at least separator operation. Specifically, in 2010, the routine determines demand levels for the substances of tanks 1960 and 1962, respectively. As noted herein, the demand may be based on current or predicted engine fueling requirements, torque requests, or various others.

Next, in 2012, the routine determines the desired fill levels of tanks 1960 and 1962, respectively, which may be based on current engine, vehicle, and/or ambient operating conditions. Then, in 2014, the routine adjusts separator operation (e.g., separator rate, efficiency, or other) based on the desired fill levels and demand levels. For example, it may be desirable to provide sufficient fuel in tank 1960 (which may be gasoline with a lower alcohol concentration than provided or in tank 1962), which may be preferable to improve fuel vaporization and transient A/F control under selected conditions, and therefore reduce exhaust emissions for a cold start. For example, in this case, the separator controls may continue operating the separator when tank 1962 is sufficiently filled, so that sufficient fuel is stored in tank 1960 for the next cold start.

As another example, the separator may shift production between the higher and lower alcohol concentration outputs so as to not overfill either of tanks 1960 or 1962. Or the separator may be operated to ensure sufficient alcohol-rich mixture in tank 1962 for one or more wide-open throttle accelerations to highway speed.

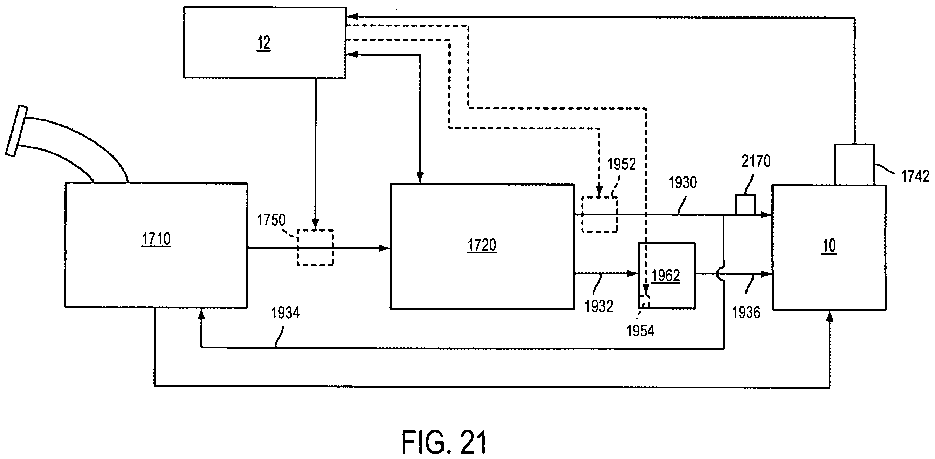

Referring now to Figure 21, another example fuel system is provided similar to that of Figures 17 and 19, except that only one of two output mixtures (1932) has a storage tank 1962 to enable buffering of the generation rate from the engine usage rate. In this way, it is possible to provide more consistent generation rate of the mixture in 1932 and thereby improve generation efficiency under selected conditions, while reducing system storage costs, since the excess generation from the other output mixture 1930 is returned to tank 1710 via line 1934, e.g., using pressure regulator 2170.

In one example, such a system can reduce the system size and cost and packaging space by avoiding the separate tanks used in Figure 19.

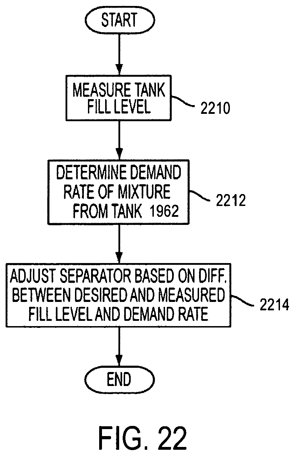

One example control routine for the configuration of Figure 21 is illustrated in Figure 22. In one embodiment, the control routines may maintain sufficient mixture level in tank 1962 with the higher alcohol concentration (e.g., ethanol) to power the engine for one or more wide-open throttle accelerations to highway speed. Again, different control actions may be taken to account for variation of the size and the parasitic losses of the separator. For example, if the separator requires low electric power or other inputs, it may operate whenever tank 1962 is less than full (and optionally with some hysteresis).

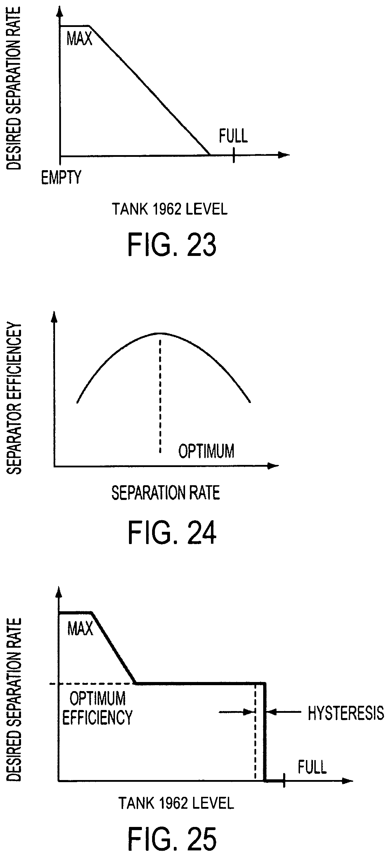

Alternatively, if parasitic losses are higher, and/or if separator efficiency is a function of separation rate, then additional control actions may be taken. For example, more sophisticated controls described below may be used to minimize the losses. Regardless of efficiency, the separator may be operated at maximum or increased separation rate whenever tank 1962 is below a threshold value, which may be near empty. If parasitic losses are proportional to separation rate, then the separator may be controlled to make separation rate substantially inversely proportional to tank level, as shown in Figure 23. If separator efficiency is maximum at some intermediate separation rate as shown in Figure 24, the controls may maximize or increase time spent at or near that rate, as shown in Figure 25. Further, combinations of the above controls may be used. Further still, the above control adjustments to separation rate may be translated into a feedback control routine for controlling fill level of one or more tanks by adjusting the separator and/or other operating parameters.

Returning to Figure 22, in 2210 the routine determines or measures a current tank fill level of tank 1962. Next, in 2212, the routine determines a demand rate of fuel from tank 1962 based on operating conditions, including current and/or predicted conditions, for example. Then, in 2214, the routine adjusts separator operation based on a difference between a desired fill state (e.g., full, or partly filled) and the measured fill level, as well as based on the demand rate. In this way, it is possible to take into account both engine demand and tank fill conditions to provide sufficient and more efficient separation.

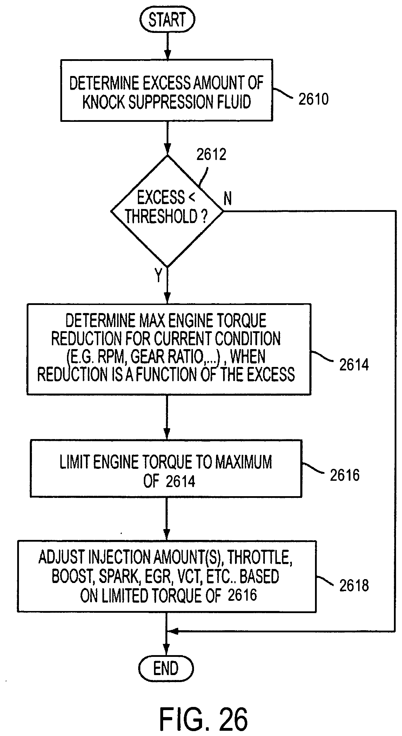

Referring now specifically to Figure 26, a routine is described for adjusting engine output limits, and thus usage rate of a knock suppression fluid, based on an amount of storage of the knock suppression fluid, such as a level in tank 1962, for example. Specifically, the routine adjusts operation to reduce sudden decreases in peak engine output caused by sudden unavailability of the knock suppression fluid (e.g., due to depletion).

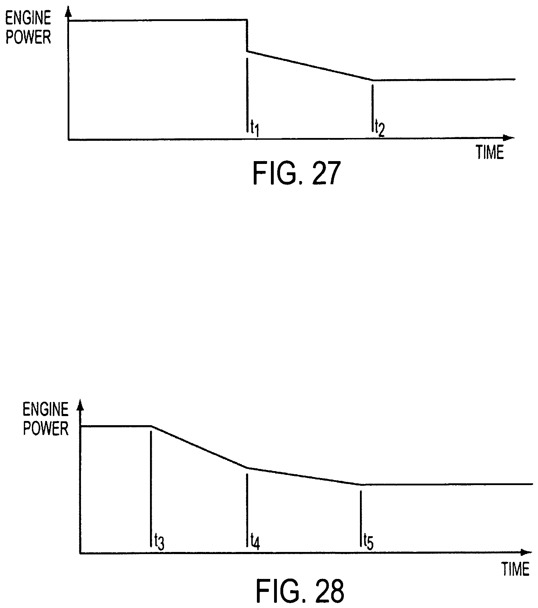

In other words, as shown by the graph of Figure 27, in the case of continuous high engine power demand, if a secondary fluid, such as a knock suppression fluid, is used indiscriminately, abrupt decreases in engine power may occur. For example, before time t1; sufficient knock suppression fluid is available and being used to enable operation at a high engine power. However, at time t1, the storage is depleted and the usage rate is limited by the separator rate (here it is assumed that the rate decreases due to a decrease in separator performance as the knock suppression substance in the tank is depleted). Then, at time t3, there is no substance to be separated left in the tank (e.g., 410, 1710).

Likewise, in another example of intermittent high engine output demand, again the driver may experience an abrupt decrease in available engine output as illustrated in Figure 28. This graph illustrates that at time t6, the knock suppression fuel is depleted, and thus at t7, the driver suddenly discovers a power loss. Specifically, before t6, the solid line indicating driver request and the dashed line indicated output delivered by the engine are aligned, whereas at t7, there may be a substantial difference.

In another embodiment, the routine adjusts engine operation (e.g., delivery of gasoline and a knock suppression fluid such as separated ethanol), based on the level of storage. Specifically, in 2610, the routine determines an excess amount of knock suppression fluid, such as an amount stored in a tank greater than a minimum level. Next, in 2612, the routine determines whether the excess is less than a threshold value in 2612. If not, the routine ends. Otherwise, the routine continues to 2614 to determine a maximum engine torque reduction for the current conditions, where the reduction may be a function of the excess. For example, the reduction may be proportional to the excess, where with a larger excess, the reduction is smaller and with a smaller excess, the reduction is greater. Further, the current conditions considered may include engine speed (RPM), gear ratio of a transmission, and others. Next, in 2616, the routine limits engine torque via the reduction of 2614, and then in 2618 the routine adjusts injection amount(s), throttle angle, boost amount, spark timing, exhaust gas recirculation amount, cam timing and/or valve timing, and others based on the limited torque value of 2616.

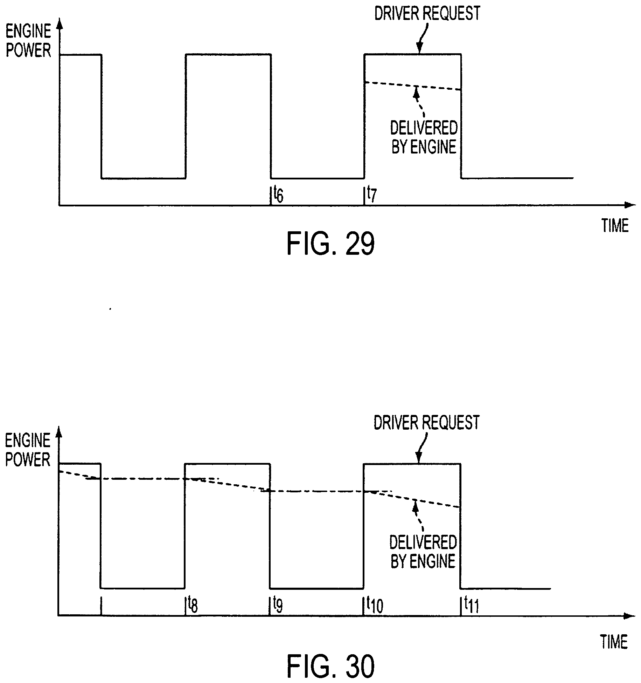

In this way, a gradual reduction in engine output and vehicle performance can be provided, thus reducing abrupt changes that may be more objectionable to a vehicle operator. For example, as shown in Figure 29 (which shows an example similar to that of Figure 27), full output may be provided up to time t3, and then it may be more gradually reduced to time t4 before emptying storage of a knock suppression fluid, where time t4 is generally longer than t1 of Figure 27. Again, after t4, the separator capability dictates usage rates until t5 when there is no substance to be separated left in the tank. Likewise, Figure 30 shows a graph similar to Figure 28, but using a control routine to provide gradual power decrease over a plurality of intermittent high power output requests. Specifically, between each of t8 and t9, and t10 and t11, a gradual decrease is provided. Further, the dash dot lines illustrates that the driver is able to return to a peak torque or power near that previously provided.

It will be appreciated that the configurations, systems, and routines disclosed herein are exemplary in nature, and that these specific embodiments are not to be considered in a limiting sense, because numerous variations are possible. For example, the above approaches can be applied to V-6, 1-3, 1-4, 1-5, 1-6, V-8, V-10, V-12, opposed 4, and other engine types. As another example, engine 10 may be a variable displacement engine in which some cylinders (e.g., half) are deactivated by deactivating intake and exhaust valves for those cylinders. In this way, improved fuel economy may be achieved. However, as noted herein, in one example injection using multiple types of fuel delivery (e.g., fuel composition or delivery location) can be used to reduce a tendency of knock at higher loads. Thus, by operating for example with direct injection of water and/or a fuel containing alcohol (such as ethanol or an ethanol blend) during cylinder deactivation operation, it may be possible to extend a range of cylinder deactivation, thereby further improving fuel economy.

As will be appreciated by one of ordinary skill in the art, the specific routines described herein in the flowcharts and the specification may represent one or more of any number of processing strategies such as event-driven, interrupt-driven, multi-tasking, multi-threading, and the like. As such, various steps or functions illustrated may be performed in the sequence illustrated, in parallel, or in some cases omitted. Likewise, the order of processing is not necessarily required to achieve the features and advantages of the example embodiments of the invention described herein, but is provided for ease of illustration and description. Although not explicitly illustrated, one of ordinary skill in the art will recognize that one or more of the illustrated steps or functions may be repeatedly performed depending on the particular strategy being used. Further, these figures graphically represent code to be programmed into the computer readable storage medium in controller 12. Further still, while the various routines may show a "start" and "end" block, the routines may be repeatedly performed in an iterative manner, for example.

The following claims particularly point out certain combinations and subcombinations regarded as novel and nonobvious. These claims may refer to "an" element or "a first" element or the equivalent thereof. Such claims should be understood to include incorporation of one or more such elements, neither requiring nor excluding two or more such elements. Other combinations and subcombinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A method of operating a vehicle system including an internal combustion engine (10), comprising:
separating a second fuel from a first fuel, the second fuel having a greater concentration of at least one component, acting as knock suppression fluid, than the first fuel;
combusting at least said first fuel at least during a first engine load; and
combusting at least said second fuel at least during a second engine load higher than the first engine load,
**characterized in that**
engine operation of the vehicle system is adjusted in response to a separator capability of a separator (320, 520, 620, 720, 820, 920, 1020, 1120, 1220, 1320, 1420, 1730) performing the separating, and that
the method further comprises a routine for enabling and controlling separator operation, wherein the routine determines an excess amount of knock suppression fluid, such as an amount stored in a tank greater than a minimum level, the routine further determines whether the excess is less than a threshold, wherein if the excess is less than the threshold, the maximum engine torque is reduced.

2. The method of claim 1 further comprising, increasing an amount of the second fuel that is combusted relative to an amount of the first fuel that is combusted with increasing load.

3. The method of claim 1 further comprising, injecting the second fuel directly into at least one cylinder of the engine (10) via a direct injector (66B).

4. The method of claim 3 further comprising, injecting the first fuel into an intake passage upstream of an intake valve (52A) of the engine (10) via a port injector (66A).

5. The method of claim 3 further comprising, injecting the first fuel directly into said at least one cylinder of the engine (10) via the direct injector (66B).

6. The method of claim 1, wherein the component includes an alcohol.

7. The method of claim 6, wherein the alcohol includes ethanol.

8. The method of claim 1, wherein the component includes water.

9. The method of claim 1, wherein said separating is performed at the separator (320, 520, 620, 720, 820, 920, 1020, 1120, 1220, 1320, 1420, 1730).

10. The method of claim 9 further comprising, applying a pressure at the separator (320, 520, 620, 720, 820, 920, 1020, 1120, 1220, 1320, 1420, 1730) to at least partially separate the second fuel from the first fuel.

11. The method of claim 9 further comprising, adjusting a condition of the separator (320, 520, 620, 720, 820, 920, 1020, 1120, 1220, 1320, 1420, 1730) responsive to an operating condition, wherein the operating condition includes at least one of a temperature of the separator (320, 520, 620, 720, 820, 920, 1020, 1120, 1220, 1320, 1420, 1730) and a rate of consumption of the second fuel by the engine (10).

12. The method of claim 9, wherein said separating includes contacting the first fuel and the second fuel to a selective barrier (622, 722, 822, 922, 1022, 1122) of the separator (320, 620, 720, 820, 920, 1020, 1120, 1220, 1320, 1420, 1730), wherein the selective barrier (622, 722, 822, 922, 1022, 1122) transports said second fuel.

13. The method of claim 9 further comprising, receiving a fuel mixture including the first fuel and the second fuel at a fuel tank (1710), wherein the fuel tank (1710) is fluidically coupled to the separator (1720); and wherein at least a portion of the first fuel or a portion of the second fuel is returned to the fuel tank (1710) after the second fuel is separated from the first fuel.

14. The method of claim 1, wherein the second fuel is an oxygenated fuel component-enriched fuel fraction and the first fuel is a hydrocarbon-enriched fuel fraction.

15. A vehicle system, comprising:
an internal combustion engine (10) including at least one cylinder;
a separator (320, 520, 620, 720, 820, 920, 1020, 1120, 1220, 1320, 1420, 1730) for separating a second fuel and a first fuel from a fuel mixture, the second fuel having a greater concentration of alcohol, acting as knock suppression fluid, than the first fuel;
a direct injector (66B) for injecting the second fuel directly into the cylinder;
a boosting device coupled to an air passage communicating with the engine (10); and
a control system (12) for:
combusting at least said first fuel in the cylinder at least during a first engine load; and
combusting at least said second fuel in the cylinder at least during a second engine load higher than the first engine load,
**characterized in that**
the control system (12) is further configured to adjust engine operation of the vehicle system in response to a separator capability of the separator (320, 520, 620, 720, 820, 920, 1020, 1120, 1220, 1320, 1420, 1730), and that engine operation is adjusted by a routine provided for enabling and controlling separator operation, wherein the routine determines an excess amount of knock suppression fluid, such as an amount stored in a tank greater than a minimum level, the routine further determines whether the excess is less than a threshold, wherein if the excess is less than the threshold, the maximum engine torque is reduced.

16. The vehicle system of claim 15, wherein the alcohol includes ethanol.

17. The vehicle system of claim 15, further comprising a port injector (66A) for injecting the first fuel into the air passage upstream of the engine (10).

18. The vehicle system of claim 15, wherein the control system (12) is further configured to vary an amount of the second fuel that is combusted by the engine (10) relative to an amount of the first fuel that is combusted by the engine (10) responsive to a level of boost provided to the engine (10) by the boosting device.

19. The vehicle system of claim 15 further comprising, a fuel pump for applying a pressure at the separator (320, 520, 620, 720, 820, 920, 1020, 1120, 1220, 1320, 1420, 1730) to at least partially separate the second fuel from the first fuel; and wherein the control system (12) is further configured to vary the pressure applied at the separator (320, 520, 620, 720, 820, 920, 1020, 1120, 1220, 1320, 1420, 1730) by the fuel pump responsive to a rate of consumption of the second fuel by the engine (10).

20. The method of claim 1, comprising:
separating a first fuel fraction from a fuel mixture including said first fuel fraction and a second fuel fraction by transporting said first fuel fraction through a selective barrier (622, 722, 822, 922, 1022, 1122) of a separator (320, 620, 720, 820, 920, 1020, 1120, 1220, 1320, 1420, 1730), said first fuel fraction having a greater concentration of ethanol than said fuel mixture and said second fuel fraction;
increasing a relative amount of said first fuel fraction delivered to the engine (10) relative to an amount of the second fuel fraction with an increasing engine load.

21. The method of claim 20, wherein the first fuel fraction is delivered to at least one cylinder of the engine (10) via a direct injector (66B) and at least the second fuel fraction is delivered to the engine (10) via a second injector (66A).

22. The method of claim 20, wherein the engine (10) includes a boosting device, and wherein the method further comprises increasing the amount of the first fuel fraction delivered to the engine (10) relative to the amount of the second fuel fraction with an increasing level of boost provided to the engine (10) by the boosting device; and wherein the second fuel fraction includes a greater concentration of gasoline than said first fuel fraction.

23. The method of claim 1, comprising:
separating a second fuel from a first fuel, the second fuel having a lower heat of vaporization than the first fuel;
combusting at least said first fuel at least during a first engine load; and
combusting at least said second fuel at least during a second engine load higher than the first engine load.

## Patentansprüche

1. Verfahren zum Betreiben eines Fahrzeugsystems, das einen Verbrennungsmotor (10) beinhaltet, das Verfahren umfassend:
Trennen eines zweiten Kraftstoffs von einem ersten Kraftstoff, wobei der zweite Kraftstoff eine größere Konzentration an zumindest einem Bestandteil, der als Klopfunterbindungsfluid wirkt, als der erste Kraftstoff hat;
Verbrennen von zumindest dem ersten Kraftstoff zumindest während einer ersten Motorlast; und
Verbrennen von zumindest dem zweiten Kraftstoff zumindest während einer zweiten Motorlast, die höher als die erste Motorlast ist,
**dadurch gekennzeichnet, dass**
ein Motorbetrieb des Fahrzeugsystems als Reaktion auf eine Trennfähigkeit eines Trenners (320, 520, 620, 720, 820, 920, 1020, 1120, 1220, 1320, 1420, 1730) eingestellt wird, der das Trennen durchführt, und dass das Verfahren ferner eine Routine zur Ermöglichung und Steuerung eines Trennbetriebs umfasst, wobei die Routine eine überschüssige Menge an Klopfunterbindungsfluid bestimmt, zum Beispiel eine in einem Tank gespeicherte Menge, die größer als ein Minimalpegel ist, die Routine ferner bestimmt, ob der Überschuss geringer als ein Grenzwert ist, wobei falls der Überschuss geringer als der Grenzwert ist, das maximale Motordrehmoment verringert wird.

2. Verfahren nach Anspruch 1, ferner umfassend das Erhöhen einer Menge des zweiten Kraftstoffs, der verbrannt wird, gegenüber einer Menge des ersten Kraftstoffs, der verbrannt wird, mit steigender Last.

3. Verfahren nach Anspruch 1, ferner umfassend das Einspritzen des zweiten Kraftstoffs unmittelbar in zumindest einen Zylinder des Motors (10) über einen Direktinjektor (66B).

4. Verfahren nach Anspruch 3, ferner umfassend das Einspritzen des ersten Kraftstoffs in einen Ansaugkanal stromaufwärts eines Ansaugventils (52A) des Motors (10) über einen Anschluss-Injektor (66A).

5. Verfahren nach Anspruch 3, ferner umfassend das Einspritzen des ersten Kraftstoffs unmittelbar in diesen zumindest einen Zylinder des Motors (10) über den Direktinjektor (66B).

6. Verfahren nach Anspruch 1, wobei der Bestandteil einen Alkohol beinhaltet.

7. Verfahren nach Anspruch 6, wobei der Alkohol Ethanol beinhaltet.

8. Verfahren nach Anspruch 1, wobei der Bestandteil Wasser beinhaltet.

9. Verfahren nach Anspruch 1, wobei das Trennen an dem Trenner (320, 520, 620, 720, 820, 920, 1020, 1120, 1220, 1320, 1420, 1730) durchgeführt wird.

10. Verfahren nach Anspruch 9, ferner umfassend das Aufbringen eines Drucks an dem Trenner (320, 520, 620, 720, 820, 920, 1020, 1120, 1220, 1320, 1420, 1730), um den zweiten Kraftstoff zumindest teilweise von dem ersten Kraftstoff zu trennen.

11. Verfahren nach Anspruch 9, ferner umfassend das Einstellen einer Bedingung des Trenners (320, 520, 620, 720, 820, 920, 1020, 1120, 1220, 1320, 1420, 1730) als Reaktion auf eine Betriebsbedingung, wobei die Betriebsbedingung eine Temperatur des Trenners (320, 520, 620, 720, 820, 920, 1020, 1120, 1220, 1320, 1420, 1730) und/oder eine Verbrauchsrate des zweiten Kraftstoffs durch den Motor (10) umfasst.

12. Verfahren nach Anspruch 9, wobei dieses Trennen ein In-Kontakt-Bringen des ersten Kraftstoffs und des zweiten Kraftstoffs mit einer selektiven Barriere (622, 722, 822, 922, 1022, 1122) des Trenners (320, 620, 720, 820, 920, 1020, 1120, 1220, 1320, 1420, 1730) umfasst, wobei die selektive Barriere (622, 722, 822, 922, 1022, 1122) diesen zweiten Kraftstoff transportiert.

13. Verfahren nach Anspruch 9, ferner umfassend das Aufnehmen eines Kraftstoffgemisches umfassend den ersten Kraftstoff und den zweiten Kraftstoff an einem Kraftstofftank (1710), wobei der Kraftstofftank (1710) mit dem Trenner (1720) fluidisch gekoppelt ist; und wobei zumindest ein Teil des ersten Kraftstoffs oder ein Teil des zweiten Kraftstoffs an den Kraftstofftank (1710) rückgeführt wird, nachdem der zweite Kraftstoff von dem ersten Kraftstoff getrennt wurde.

14. Verfahren nach Anspruch 1, wobei der zweite Kraftstoff eine Kraftstofffraktion ist, die mit einer sauerstoffhaltigen Kraftstoffkomponente angereichert ist, und der erste Kraftstoff eine Kraftstofffraktion ist, die mit Kohlenwasserstoff angereichert ist.

15. Fahrzeugsystem, aufweisend:
einen Verbrennungsmotor (10), der zumindest einen Zylinder umfasst;
einen Trenner (320, 520, 620, 720, 820, 920, 1020, 1120, 1220, 1320, 1420, 1730) zum Trennen eines zweiten Kraftstoffs und eines ersten Kraftstoffs aus einem Kraftstoffgemisch, wobei der zweite Kraftstoff eine größere Konzentration an Alkohol hat, der als Klopfunterbindungsfluid wirkt, als der erste Kraftstoff;
einen Direktinjektor (66B) zum Einspritzen des zweiten Kraftstoffs direkt in den Zylinder;
eine Booster-Vorrichtung, die an einen Luftkanal gekoppelt ist, der mit dem Motor (10) kommuniziert; und
ein Steuerungssystem (12) zum:
Verbrennen von zumindest diesem ersten Kraftstoff in dem Zylinder zumindest während einer ersten Motorlast; und
Verbrennen von zumindest diesem zweiten Kraftstoff in dem Zylinder zumindest während einer zweiten Motorlast, die höher als die erste Motorlast ist,
**dadurch gekennzeichnet, dass**
das Steuerungssystem (12) ferner eingerichtet ist, den Motorbetrieb des Fahrzeugsystems als Reaktion auf eine Trennerfähigkeit des Trenners (320, 520, 620, 720, 820, 920, 1020, 1120, 1220, 1320, 1420, 1730) anzupassen, und dass der Motorbetrieb durch eine Routine angepasst wird, die zur Ermöglichung und Steuerung des Trennerbetriebs bereitgestellt ist, wobei die Routine eine überschüssige Menge an Klopfunterbindungsfluid bestimmt, zum Beispiel eine in einem Tank gespeicherte Menge, die größer als ein Minimalpegel ist, die Routine ferner bestimmt, ob der Überschuss kleiner als ein Grenzwert ist, wobei falls der Überschuss kleiner als der Grenzwert ist, das maximale Motordrehmoment verringert wird.

16. Fahrzeugsystem nach Anspruch 15, wobei der Alkohol Ethanol beinhaltet.

17. Fahrzeugsystem nach Anspruch 15, ferner aufweisend einen Anschlussinjektor (66A) zum Einspritzen des ersten Kraftstoffs in den Luftkanal stromaufwärts des Motors (10).

18. Fahrzeugsystem nach Anspruch 15, wobei das Steuerungssystem (12) ferner eingerichtet ist, eine Menge des zweiten Kraftstoffs, der durch den Motor (10) verbrannt wird, gegenüber einer Menge des ersten Kraftstoffs, der durch den Motor (10) verbrannt wird, als Reaktion auf einen Grad an Verstärkung, der dem Motor (10) durch die Booster-Vorrichtung bereitgestellt wird, zu variieren.

19. Fahrzeugsystem nach Anspruch 15, ferner aufweisend eine Kraftstoffpumpe zum Aufbringen eines Drucks an dem Trenner (320, 520, 620, 720, 820, 920, 1020, 1120, 1220, 1320, 1420, 1730) um den zweiten Kraftstoff zumindest teilweise von dem ersten Kraftstoff zu trennen; und wobei das Steuerungssystem (12) ferner eingerichtet ist, den an dem Trenner (320, 520, 620, 720, 820, 920, 1020, 1120, 1220, 1320, 1420, 1730) durch die Kraftstoffpumpe angelegten Druck als Reaktion auf eine Verbrauchsrate des zweiten Kraftstoffs durch den Motor (10) zu variieren.

20. Verfahren nach Anspruch 1, umfassend:
Trennen einer ersten Kraftstofffraktion aus einem Kraftstoffgemisch, das diese erste Kraftstofffraktion und eine zweite Kraftstofffraktion enthält, durch Transportieren dieser ersten Kraftstofffraktion durch eine selektive Barriere (622, 722, 822, 922, 1022, 1122) eines Trenners (320, 620, 720, 820, 920, 1020, 1120, 1220, 1320, 1420, 1730), wobei diese erste Kraftstofffraktion eine größere Konzentration an Ethanol hat als dieses Kraftstoffgemisch und diese zweite Kraftstofffraktion;
Erhöhen einer relativen Menge dieser ersten Kraftstofffraktion, die an den Motor (10) geliefert wird, gegenüber einer Menge der zweiten Kraftstofffraktion bei steigender Motorlast.

21. Verfahren nach Anspruch 20, wobei die erste Kraftstofffraktion über einen Direktinjektor (66B) an zumindest einen Zylinder des Motors (10) geliefert wird, und zumindest die zweite Kraftstofffraktion über einen zweiten Injektor (66A) an den Motor (10) geliefert wird.

22. Verfahren nach Anspruch 20, wobei der Motor (10) eine Booster-Vorrichtung beinhaltet, und wobei das Verfahren ferner das Erhöhen der Menge der ersten an den Motor (10) gelieferten Kraftstofffraktion gegenüber der Menge der zweiten Kraftstofffraktion bei steigendem Grad der dem Motor (10) durch die Booster-Vorrichtung bereitgestellten Verstärkung umfasst; und wobei die zweite Kraftstofffraktion eine größere Konzentration von Benzin als die erste Kraftstofffraktion umfasst.

23. Verfahren nach Anspruch 1, umfassend:
Trennen eines zweiten Kraftstoffs aus einem ersten Kraftstoff, wobei der zweite Kraftstoff eine niedrigere Verdampfungswärme als der erste Kraftstoff hat;
Verbrennen von zumindest dem ersten Kraftstoff zumindest während einer ersten Motorlast; und
Verbrennen von zumindest dem zweiten Kraftstoff während einer zweiten Motorlast, die höher als die erste Motorlast ist.

## Revendications

1. Procédé destiné à faire fonctionner un système de véhicule incluant un moteur à combustion interne (10), comprenant les étapes consistant à :
séparer un second carburant d'un premier carburant, le second carburant présentant une concentration d'au moins un composant, faisant office de fluide de suppression de détonation, plus grande que pour le premier carburant ;
réaliser la combustion au moins dudit premier carburant au moins durant une première charge de moteur, et
réaliser la combustion au moins dudit second carburant au moins durant une seconde charge de moteur, plus élevée que la première charge de moteur,
**caractérisé en ce que**
le fonctionnement de moteur du système de véhicule est ajusté en réaction à une capacité de séparateur d'un séparateur (320, 520, 620, 720, 820, 920, 1020, 1120, 1220, 1320, 1420, 1730) exécutant la séparation, et **en ce que** le procédé comprend en outre une routine pour activer et commander le fonctionnement de séparateur, dans lequel la routine détermine une quantité en surplus de fluide de suppression de détonation, telle qu'une quantité stockée dans un réservoir plus grande qu'un niveau minimal ; la routine détermine en outre si le surplus est inférieur à un seuil, et dans lequel si le surplus est inférieur au seuil, le couple moteur maximal est réduit.

2. Procédé selon la revendication 1, comprenant en outre l'étape pour augmenter une quantité du second carburant subissant une combustion, par rapport à une quantité du premier carburant subissant une combustion, avec une charge croissante.

3. Procédé selon la revendication 1, comprenant en outre l'étape pour injecter le second carburant directement dans au moins un cylindre du moteur (10) via un injecteur direct (66B).

4. Procédé selon la revendication 3, comprenant en outre l'étape pour injecter le premier carburant dans un passage de montée en amont d'une soupape d'admission (52A) du moteur (10) via un injecteur à port (66A).

5. Procédé selon la revendication 3, comprenant en outre l'étape pour injecter le premier carburant directement dans ledit au moins un cylindre du moteur (10) via l'injecteur direct (66B).

6. Procédé selon la revendication 1, dans lequel le composant inclut un alcool.

7. Procédé selon la revendication 6, dans lequel l'alcool inclut de l'éthanol.

8. Procédé selon la revendication 1, dans lequel le composant inclut de l'eau.

9. Procédé selon la revendication 1, dans lequel ladite séparation est exécutée sur le séparateur (320, 520, 620, 720, 820, 920, 1020, 1120, 1220, 1320, 1420, 1730).

10. Procédé selon la revendication 9, comprenant en outre l'étape pour appliquer une pression au niveau du séparateur (320, 520, 620, 720, 820, 920, 1020, 1120, 1220, 1320, 1420, 1730) afin de séparer au moins partiellement le second carburant du premier carburant.

11. Procédé selon la revendication 9, comprenant en outre l'étape pour ajuster une condition du séparateur (320, 520, 620, 720, 820, 920, 1020, 1120, 1220, 1320, 1420, 1730) en réaction à une condition de fonctionnement, dans lequel la condition de fonctionnement inclut au moins une condition parmi une température du séparateur (320, 520, 620, 720, 820, 920, 1020, 1120, 1220, 1320, 1420, 1730) et un taux de consommation du second carburant par le moteur (10).

12. Procédé selon la revendication 9, dans lequel ladite séparation inclut le contact du premier carburant et du second carburant avec une barrière sélective (622, 722, 822, 922, 1022, 1122) du séparateur (320, 620, 720, 820, 920, 1020, 1120, 1220, 1320, 1420, 1730), et dans lequel la barrière sélective (622, 722, 822, 922, 1022, 1122) transporte ledit second carburant.

13. Procédé selon la revendication 9, comprenant en outre l'étape pour recevoir un mélange de carburant incluant le premier carburant et le second carburant au niveau d'un réservoir de carburant (1710), dans lequel le réservoir de carburant (1710) est couplé par voie fluidique avec le séparateur (1720), et dans lequel au moins une portion du premier carburant ou une portion du second carburant est retournée vers le réservoir de carburant (1710) après séparation du second carburant du premier carburant.

14. Procédé selon la revendication 1, dans lequel le second carburant est une fraction de carburant enrichie avec un composant de carburant oxygéné, et le premier carburant est une fraction de carburant enrichie en hydrocarbure.

15. Système de véhicule, comprenant :
un moteur à combustion interne (10) incluant au moins un cylindre ;
un séparateur (320, 520, 620, 720, 820, 920, 1020, 1120, 1220, 1320, 1420, 1730) pour séparer un second carburant et un premier carburant à partir d'un premier mélange, le second carburant présentant une concentration d'alcool, faisant office de fluide de suppression de détonation, plus grande que pour le premier carburant ;
un injecteur direct (66B) pour injecter le second carburant directement dans le cylindre ;
un dispositif de suralimentation couplé avec un passage d'air communiquant avec le moteur (10), et
un système de commande (12) pour :
réaliser la combustion au moins dudit premier carburant dans le cylindre au moins durant une première charge de moteur, et
réaliser la combustion au moins dudit second carburant dans le cylindre au moins durant une seconde charge de moteur plus élevée que la première charge de moteur,
**caractérisé en ce que**
le système de commande (12) est en outre configuré pour ajuster le fonctionnement de moteur du système de véhicule en réaction à une capacité de séparateur du séparateur (320, 520, 620, 720, 820, 920, 1020, 1120, 1220, 1320, 1420, 1730), et **en ce que** le fonctionnement de moteur est ajusté par une routine prévue pour activer et commander le fonctionnement de séparateur, dans lequel la routine détermine une quantité en surplus de fluide de suppression de détonation, telle qu'une quantité stockée dans un réservoir plus grande qu'un niveau minimal ; la routine détermine en outre si le surplus est inférieur à un seuil, et dans lequel si le surplus est inférieur au seuil, le couple moteur maximal est réduit.

16. Système de véhicule selon la revendication 15, dans lequel l'alcool inclut de l'éthanol.

17. Système de véhicule selon la revendication 15, comprenant en outre un injecteur à port (66A) pour injecter le premier carburant dans le passage d'air en amont du moteur (10).

18. Système de véhicule selon la revendication 15, dans lequel le système de commande (12) est en outre configuré pour faire varier une quantité du second carburant ayant subi une combustion par le moteur (10) par rapport à une quantité du premier carburant ayant subi une combustion par le moteur (10) en réaction à un niveau de suralimentation fournie au moteur (10) par le dispositif de suralimentation.

19. Système de véhicule selon la revendication 15, comprenant en outre : une pompe à carburant pour appliquer une pression au niveau du séparateur (320, 520, 620, 720, 820, 920, 1020, 1120, 1220, 1320, 1420, 1730) afin de séparer au moins partiellement le second carburant du premier carburant, et dans lequel le système de commande (12) est en outre configuré pour faire varier la pression appliquée au niveau du séparateur (320, 520, 620, 720, 820, 920, 1020, 1120, 1220, 1320, 1420, 1730) par la pompe à carburant en réaction à un taux de consommation du second carburant par le moteur (10).

20. Procédé selon la revendication 1, comprenant en outre les étapes pour :
séparer une première fraction de carburant à partir d'un mélange de carburant incluant ladite première fraction de carburant et une seconde fraction de carburant en transportant ladite première fraction de carburant à travers une barrière sélective (622, 722, 822, 922, 1022, 1122) d'un séparateur (320, 620, 720, 820, 920, 1020, 1120, 1220, 1320, 1420, 1730), ladite première fraction de carburant présentant une concentration en éthanol plus grande que ledit mélange de carburant et ladite seconde fraction de carburant, et
augmenter une quantité relative de ladite première fraction de carburant délivrée au moteur (10) par rapport à une quantité de la seconde fraction de carburant avec une charge de moteur croissante.

21. Procédé selon la revendication 20, dans lequel la première fraction de carburant est délivrée à au moins un cylindre du moteur (10) par le biais d'un injecteur direct (66B), et au moins la seconde fraction de carburant est délivrée au moteur (10) par le biais d'un second injecteur (66A).

22. Procédé selon la revendication 20, dans lequel le moteur (10) inclut un dispositif de suralimentation, et dans lequel le procédé inclut en outre l'étape pour augmenter la quantité de la première fraction de carburant délivrée au moteur (10) par rapport à la quantité de la seconde fraction de carburant avec un niveau croissant de suralimentation fournie au moteur (10) par le dispositif de suralimentation (10), et dans lequel la seconde fraction de carburant inclut une concentration en essence plus grande que celle de ladite première fraction de carburant.

23. Procédé selon la revendication 1, comprenant en outre les étapes pour :
séparer un second carburant d'un premier carburant, le second carburant présentant une chaleur de vaporisation inférieure à celle du premier carburant ;
réaliser la combustion au moins dudit premier carburant durant une première charge de moteur, et
réaliser la combustion au moins dudit second carburant au moins durant une seconde charge de moteur plus élevée que la première charge de moteur.
